(19) Europäisches Patentamt
European Patent Office
Office européen des brevets

(11) EP 3 083 865 B1

(12) **EUROPÄISCHE PATENTSCHRIFT**

(45) Veröffentlichungstag und Bekanntmachung des Hinweises auf die Patenterteilung:
**02.04.2025 Patentblatt 2025/14**

(21) Anmeldenummer: **14821101.4**

(22) Anmeldetag: **15.12.2014**

(51) Internationale Patentklassifikation (IPC):
***C09J 133/02*** *(2006.01)* ***C08J 3/24*** *(2006.01)*

(52) Gemeinsame Patentklassifikation (CPC):
(C-Sets verfügbar)
**C08J 3/24; B29B 7/487; B29B 7/52; B29B 7/56; B29B 7/90; C08F 8/00; C08F 220/1804; C08F 220/1808; C09J 7/20; C09J 7/24; C09J 133/08;** B29B 7/485; B29B 7/845; B29B 7/86; C08J 2333/04; (Forts.)

(86) Internationale Anmeldenummer:
**PCT/EP2014/077679**

(87) Internationale Veröffentlichungsnummer:
**WO 2015/091314 (25.06.2015 Gazette 2015/25)**

(54) **VERFAHREN ZUR HERSTELLUNG VERNETZTER POLYMERE**

PROCESS FOR PRODUCING CROSSLINKED POLYMERS

PROCÉDÉ DE PRÉPARATION DE POLYMÈRES RÉTICULÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013 DE 102013226714**

(43) Veröffentlichungstag der Anmeldung:
**26.10.2016 Patentblatt 2016/43**

(73) Patentinhaber: **tesa SE**
**22848 Norderstedt (DE)**

(72) Erfinder:
- **BAMBERG, Sarah**
**22529 Hamburg (DE)**
- **BESCHMANN, Jennifer**
**20259 Hamburg (DE)**
- **PRENZEL, Alexander**
**22529 Hamburg (DE)**

(74) Vertreter: **tesa SE**
**Hugo-Kirchberg-Straße 1**
**22848 Norderstedt (DE)**

(56) Entgegenhaltungen:

| | |
|---|---|
| **EP-A1- 1 978 069** | **EP-A1- 2 439 224** |
| **EP-A1- 2 787 026** | **CA-A- 1 112 398** |
| **US-A- 4 051 195** | **US-A1- 2002 004 557** |
| **US-A1- 2006 020 062** | **US-A1- 2013 231 445** |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
C08K 5/0025; C08K 5/1515; C09J 2301/408;
C09J 2301/41; C09J 2433/00; C09J 2433/006

C-Sets
**C08F 8/00, C08F 220/1804;**
**C08F 8/00, C08F 220/1808;**
C08F 220/1804, C08F 220/1808, C08F 220/06;
C08F 220/1808, C08F 220/1804, C08F 220/06

## Beschreibung

Die Erfindung betrifft ein Verfahren zur Herstellung von vernetzten Polymeren, ein vernetztes Polyacrylat, das durch das Verfahren herstellbar ist, ein Klebeband und einen Träger für Klebebänder, die ein solches vernetztes Polyacrylat umfassen, eine Heißschmelzklebemasse und die Verwendung einer Verbindung.

Für hochwertige industrielle Anwendungen, insbesondere auch als Klebe-, Haftklebe- oder Heißsiegelmassen, können unter anderem Polyacrylate eingesetzt werden, da diese sich für die wachsenden Anforderungen in diesen Anwendungsbereichen gut eignen.

So sollten Haftmassen eine gute Anfassklebrigkeit ("Tack") aufweisen, aber auch hohen Anforderungen im Bereich der Scherfestigkeit gerecht werden. Gleichzeitig wäre auch eine gute Verarbeitbarkeit, insbesondere eine hohe Eignung zur Beschichtung auf Trägermaterialien, wünschenswert.

Bei der Beschichtung mit Polyacrylatmassen aus Lösung oder als Dispersion, die man beispielsweise als Haftkleber, viskoelastischer Träger oder Heißsiegelmassen verwenden kann, ist eine thermische Vernetzung an sich bekannt. In der Regel setzt man einen thermischen Vernetzer, z.B. ein multifunktionelles Isocyanat oder ein Metall-Chelat, zur Lösung bzw. Dispersion eines entsprechend mit funktionellen Gruppen ausgestatteten Polyacrylats zu, beschichtet flächig auf ein Substrat mit Hilfe eines Rakels oder Streichbalkens und trocknet anschließend. Weiterhin ist es möglich, gelöste oder dispergierte Polymere zu verwenden, die zwei unterschiedliche funktionelle Gruppen enthalten, welche miteinander reagieren können. Beispiele hierfür sind Polyacrylate, die mittels Copolymerisation von Acrylsäure und Glycidylmethacrylat neben weiteren, weichmachenden Acrylatcomonomeren hergestellt wurden. In den zuvor genannten Verfahren werden jeweils Verdünnungsmittel, also organische Lösemittel oder im Falle der Dispersionen Wasser verdampft und das Polyacrylat entsprechend vernetzt. Die Vernetzung ist sehr wichtig für die Beschichtungen, denn dadurch erhalten diese eine ausreichende Kohäsion und Wärmescherfestigkeit. Ohne Vernetzung wären die Beschichtungen zu weich und würden schon bei geringer Belastung zerfließen.

Des Weiteren ist die Beachtung der sogenannten "Topfzeit", also der Verarbeitungszeit, in der das System im verarbeitungsfähigen Zustand vorliegt, notwendig. Die Verarbeitungszeit kann je nach Vernetzungssystem deutlich unterschiedlich sein. Ist diese Zeit zu kurz, so reagiert der Vernetzer schon zu stark in der Polyacrylatlösung ab. Die Lösung ist dann schon zu stark anvernetzt (angegelt bzw. vergelt) und kann nicht mehr gleichmäßig als Beschichtung aufgetragen werden.

Insbesondere aus Umweltschutzgründen entwickelt sich der technologische Prozess zur Herstellung von Haftklebemassen immer weiter. Durch restriktiver werdende Umweltauflagen und auch steigende Preise für Lösungsmittel ist es erstrebenswert, Lösungsmittel aus Fertigungsprozessen für Polymere so weit wie möglich zu eliminieren. In der Industrie sind daher Schmelzverfahren, die auch als Heißschmelzverfahren oder Hotmeltverfahren bezeichnet werden, mit lösungsmittelfreier Beschichtungstechnik zur Herstellung von Polymeren, insbesondere von Haftklebemassen, von stetig wachsender Bedeutung. Hierbei werden schmelzfähige Polymermassen, also solche Polymermassen, die bei erhöhten Temperaturen in den fließfähigen Zustand übergehen, ohne sich zu zersetzen, verarbeitet. Diese Massen lassen sich im Allgemeinen gut aus dem Zustand der Schmelze heraus verarbeiten. In Weiterentwicklungen solcher Prozesse kann auch die Herstellung lösungsmittelarm oder lösungsmittelfrei erfolgen.

Die Einführung der Hotmelt-Technologie stellt wachsende Anforderungen an Klebemassen. Insbesondere die vorgenannten schmelzfähigen Polyacrylatmassen, andere Bezeichnungen sind "Polyacrylathotmelts" und "Acrylathotmelts", werden sehr intensiv auf Verbesserungen hin untersucht. Bei der Beschichtung mit Polyacrylatmassen aus der Schmelze ist die thermische Vernetzung bislang nicht sehr verbreitet.

Im Stand der Technik sind auch einige Verfahren zur thermischen Vernetzung von Acrylathotmelts bekannt. Hierbei wird jeweils zur Acrylatschmelze vor der Beschichtung ein Vernetzer zugesetzt, dann wird ausgeformt und zur Rolle gewickelt.

So wird beispielsweise die Vernetzung mittels multifunktioneller Epoxide in der EP 1 978 069 A1 beschrieben. Es wurde darin gezeigt, dass durch den Einsatz von Beschleunigern, ohne die die Epoxide der EP 1 978 069 A1 so gut wie nicht mit dem Polyacrylat reagieren würden, der Vernetzungsgrad unabhängig von der Vernetzungskinetik eingestellt werden kann.

Damit mit der Masse nach der Verarbeitung als Schmelze noch gleichmäßig beschichtet werden kann, darf die Vernetzung in einem Extruder nur zu einem geringen Anteil erfolgen und muss anschließend noch bei niedrigeren Temperaturen als im Extruder weiter stattfinden, um eine ausreichende Vernetzung zu erzielen. Die in der EP 1 978 069 A1 beschrieben Vernetzer-Beschleuniger-Systeme erfüllten zwar die zuvor genannte Anforderung und sind industriell einsetzbar, jedoch war die Vernetzung von und die Beschichtung mit Polyacrylaten mit einem hohen Acrylsäuregehalt schwierig, sodass entweder ein schlechtes Beschichtungsbild aufgrund von Gelbildung resultierte bzw. geringere Mengen an Vernetzer eingesetzt werden mussten, was zu untervernetzten Polymeren führte, die gerade hinsichtlich der Scherfestigkeit bei hohen Temperaturen Schwächen aufweisen.

Die im Stand der Technik am häufigsten verwendeten Vernetzersysteme sind aliphatische und aromatische Glycidylether, Glycidylester und *N,N*-Diglycidylamine. Diese epoxidischen Vernetzer weisen einige Nachteile auf. So sind

sie aufgrund ihrer unterschiedlichen Reaktivität und der dadurch resultierenden unterschiedlichen Topfzeit nicht für alle Beschichtungsverfahren geeignet. Der Einsatz von *N,N*-Diglycidylaminen führt zum Beispiel zur sofortigen Vergelung beim Compoundieren. Andererseits sind einige Epoxide sehr reaktionsträge und benötigen sehr hohe Aktivierungsenergien für die Vernetzungsreaktion mit Carboxygruppen, sodass die Beschichtung auf thermosensiblen Untergründen nicht möglich ist. Ein weiterer Nachteil ist der teilweise hohe Chlorgehalt insbesondere der aliphatischen Glycidylether, wodurch deren Einsatz für einige Anwendungen, beispielsweise im Automobilbereich oder in der Elektronikindustrie, nicht möglich bzw. nicht gewünscht ist.

Zumindest eine Aufgabe der Erfindung ist es, ein verbessertes Verfahren zur Herstellung von vernetzten Polyacrylaten, bevorzugt für Polyacrylathaftklebemassen anzugeben. Das Verfahren soll die oben genannten Nachteile des Stands der Technik überwinden und insbesondere einen oder mehrere der folgenden Aspekte erfüllen. Es soll

- geeignet sein, Polyacrylate in Lösung, in wässriger Dispersion sowie in der Schmelze zu verarbeiten und gleichzeitig bzw. anschließend zu vernetzen,
- für die Verarbeitung insbesondere aus der Schmelze eine hinreichend lange Verarbeitungszeit aufweisen,
- vorteilhaft halogenfrei sein,
- vernetzte Polyacrylate und bevorzugt vernetzte Polyacrylathaftklebemassen, zugänglich machen, die trotz Erhöhung der Kohäsion insbesondere bei hohen Temperaturen auch eine hohe Adhäsion aufzeigen, und
- effizient sein.

Dabei soll weiterhin auf den Einsatz von Schutzgruppen, die gegebenenfalls durch aktinische Strahlung oder andere Methoden wieder entfernt werden müssten und in der Masse teilweise verbleiben, verzichtet werden. Der Vernetzungsgrad der Polymermasse soll ohne eine Beeinflussung der Prozessführung auf ein gewünschtes Niveau einstellbar sein. Die Nachvernetzung soll auch bei niedrigen Temperaturen schnell zu einem Endniveau fortlaufen.

Weitere Aufgaben sind es, ein vernetztes Polyacrylat, das durch das Verfahren herstellbar ist, ein Klebeband und einen Träger für Klebebänder, die ein solches vernetztes Polyacrylat umfassen, eine Heißschmelzklebemasse und die Verwendung einer Verbindung anzugeben.

Zumindest eine dieser Aufgaben wird durch das Verfahren, das vernetzte Polyacrylat, die Verwendung, das Klebeband, dem Träger für Klebebänder und die Heißschmelzklebemasse gemäß den unabhängigen Ansprüchen gelöst. Unteransprüche geben vorteilhafte Ausgestaltungen an.

Es wird ein Verfahren zur Herstellung von vernetzten Polymeren angeben. Nach zumindest einer Ausführungsform des Verfahrens wird ein Polyacrylat, das mindestens eine Carboxygruppe umfasst, durch Reaktion mit einem mindestens zweifach epoxidierten Vernetzer zumindest teilweise vernetzt, wobei
der mindestens zweifach epoxidierte Vernetzer aus einer Gruppe ausgewählt ist, die Fettsäuren, Fettsäureester, Fettalkohole, Ester von Fettalkoholen und Kombinationen hiervon umfasst.

Das Verfahren zur Herstellung von vernetzten Polymeren wird auch kurz als "Verfahren" bezeichnet. Der mindestens zweifach epoxidierte Vernetzer wird im Rahmen der Anmeldung auch kurz als "Vernetzer" bezeichnet. Andere Vernetzer sind beispielsweise als herkömmliche oder weitere Vernetzer bezeichnet. "Mindestens zweifach epoxidiert" heißt, dass ein Vernetzermolekül mindestens zwei Epoxidgruppen, Oxiranringe, aufweist. Der Vernetzer kann eine reine Verbindung sein, es kann aber auch ein Gemisch von Verbindungen eingesetzt werden.

Das Polyacrylat, das mindestens eine Carboxygruppe umfasst, wird im Rahmen der Anmeldung auch kurz als "Polymer" bezeichnet. Das Polymer umfasst oder besteht aus Polymersträngen, die nicht miteinander vernetzt sind oder ggf. nur zufällig und im geringen Maße über funktionelle Gruppen miteinander verbunden sind. Die Polymerstränge können linear und/oder auch verzweigt sein, was ebenso Kurz- wie Langekettenverzweigungen mit einschließt. In der Regel besteht das Polymer aus nicht vernetzten Polymersträngen. Das Polymer kann als Polymerisat von Monomeren verstanden werden. Unter Carboxygruppen, was die mindestens eine Carboxygruppe des Polymers mit einschließt, werden im Rahmen der Anmeldung freie Carbonsäuregruppen ($-CO_2H$) sowie Carbonsäureanionen ($-CO_2^-$) verstanden. Ein solches Carbonsäureanion kann ggf. in-situ aus einer freien Carbonsäuregruppe gebildet werden. Das zugehörige Kation kann hierbei beliebig sein, beispielsweise ein Alkalimetallion oder eine protonierte Base.

Durch die Reaktion mit dem Vernetzer werden die Polymere zumindest teilweise oder vollständig miteinander verbunden, sodass ein "vernetztes Polymer" erhalten wird. Die Reaktion erfolgt über die zumindest eine Carboxygruppe. "Polymermassen" umfassen die Polymere oder bestehen aus ihnen. Neben Polymeren können weitere Verbindungen, zum Beispiel der Vernetzer, etwaige Lösungsmittel, etwaige Beschleuniger und/oder etwaige Additive, enthalten sein. In Polymermassen kann bereits eine anteilige Vernetzung erfolgt sein.

Die Erfinder haben in überraschender Weise gefunden, dass durch die Verwendung von mindestens zweifach epoxidierten Fettsäuren, Fettsäureestern, Fettalkoholen, Estern von Fettalkoholen sowie Kombinationen hiervon als Vernetzer zumindest eine der oben genannten Aufgaben hervorragend gelöst wird und die zuvor beschriebenen Nachteile des Stands der Technik überwunden oder zumindest minimiert werden können.

Die erfindungsgemäß eingesetzten Vernetzer lassen sich unabhängig von der Anzahl an Carboxygruppen oder

anderen reaktiven Gruppen im Polymer sowohl in Lösung, in Form von in Wasser dispergierten Polymeren sowie in der Schmelze von Polymeren gut verarbeiten, sodass das erfindungsgemäße Verfahren vielseitig eingesetzt werden kann. Das Polymer kann also im Verfahren als Lösung, als Dispersion oder als Schmelze vorliegen. Es kann in einer Polymermasse vorliegen. Das Polymer kann mit dem Vernetzer versetzt, geformt und vernetzt werden.

Die Erfinder fanden überraschend heraus, dass die erfindungsgemäß eingesetzten Vernetzer hinreichend reaktiv sind, dass diese auch ohne zusätzliche Beschleunigersubstanzen mit den Carboxygruppen des Polymers reagieren können. Das Verfahren kann also ohne Beschleuniger erfolgreich und effizient geführt werden. Dies führen die Erfinder insbesondere auf eine höhere Reaktivität der verwendeten Vernetzer zurück. Fettsäuren bzw. Fettalkohole, auf denen der Vernetzer basiert, enthalten in der Regel hauptsächlich disubstituierte Doppelbindungen, sodass nach Epoxidierung auch disubstituierte Epoxide vorliegen. Diese sind vermutlich aufgrund von höherer Ringspannung reaktiver als zahlreiche herkömmliche Vernetzerverbindungen, wie beispielsweise Glycidylether und Glycidylester.

Im Gegensatz zur Verwendung von herkömmlichen reaktionsträgen (Epoxid-)Vernetzern ist das erfindungsgemäße Verfahren nicht auf hohe Beschleunigerkonzentrationen angewiesen, wodurch die Gefahr einer zu raschen Vernetzung reduziert wird. Durch den Einsatz der erfindungsgemäß eingesetzten Vernetzer wird also mit Vorteil eine ausreichend lange Verarbeitungszeit, Topfzeit, für das Verfahren ermöglicht. Diese kann durch optional zugesetzte Beschleuniger, wie sie unten näher beschrieben sind, auch gezielt eingestellt werden, da der Vernetzungserfolg nicht von der Zugabe der Beschleuniger abhängig ist. Somit lassen sich in dem erfindungsgemäßen Verfahren auch sehr gut Polymere einsetzen und verarbeiten, die viele funktionelle Gruppen, insbesondere Carboxygruppen, aufweisen, da die Verarbeitungszeit ohne oder mit wenig Beschleunigern hinreichend lang gewählt werden kann. Der Vernetzungsgrad des vernetzten Polymers ergibt sich wiederum aus der Menge des zugesetzten Vernetzers, hängt also nicht von einem etwaigen Beschleuniger ab.

Ein weiterer Vorteil des erfindungsgemäßen Verfahrens, der mit den verwendeten Vernetzern einhergeht, ist, dass für die Vernetzung keine erhöhten Temperaturen benötigt werden. Üblicherweise werden Polymere mit einem Vernetzer versetzt und in Form gebracht, es wird zum Beispiel eine Schicht gebildet. Hierbei wird im Allgemeinen auch erhitzt. Danach kann die Masse rasch auf Raumtemperatur abgekühlt werden. Mit den erfindungsgemäß eingesetzten Vernetzern kann bei Raumtemperatur ein vergleichsweise zügiger Abschluss der Vernetzung erfolgen, wodurch Lagerzeiten für die Vernetzung verkürzt werden. Mit Vorteil kann im Gegensatz zu vielen herkömmlichen Verfahren insbesondere auf ein kostenintensives Erwärmen bei der Lagerung bzw. Vernetzung verzichtet werden.

Weiterhin haben die Erfinder auch überraschend gefunden, dass das durch das erfindungsgemäße Verfahren hergestellte, vernetzte Polymer sehr gute Materialeigenschaften aufweist. Es weist sowohl gute Adhäsions- als auch gute Kohäsionseigenschaften auf. Des Weiteren bleibt es auch bei einem hohen Vernetzungsgrad überraschend flexibel und elastisch. Die Erfinder vermuten, dass dies auf die langen Kettenlängen von Fettsäuren und Fettalkoholen bzw. den davon abgeleiteten Estern zurückzuführen ist, welche elastische Vernetzungspunkte zwischen den Polymersträngen ermöglichen. Im Gegensatz zu Fettsäuren, Fettalkoholen und den Estern hiervon sind herkömmliche Vernetzer meist kurzkettig und vergleichsweise steif und führen bei gleichem Vernetzungsgrad in der Regel zu weniger flexiblen und weniger elastischen vernetzten Polymeren. Aliphatische oder aromatische Glycidylether, Glycidylester und N,N-Diglycidylamine haben in der Regel kurze Kettenlängen. Auf diese Verbindungen kann somit erfindungsgemäß verzichtet werden.

Das Vernetzen kann vorzugsweise thermisch erfolgen. Hierdurch kann vorteilhafterweise ein Vernetzungsprofil, wie es zum Beispiel bei dem Vernetzen mittels Bestrahlung auftritt, vermieden werden. Das thermische Vernetzen fördert eine gute Balance zwischen adhäsiven und kohäsiven Eigenschaften, die sich idealerweise für die gesamte Schicht steuern und einstellen lassen.

Erfindungsgemäß ist das Polymer, das mindestens eine Carboxygruppe umfasst, ein Polyacrylat. Somit werden durch das Verfahren also vernetzte Polyacrylate, insbesondere Polyacrylathaftklebemassen, mit den oben beschriebenen, vorteilhaften Eigenschaften erhalten. Die oben beschriebenen Begriffe "Polymer", "vernetztes Polymer", "Polymermasse" werden analog für die Polyacrylate verwendet.

Das Verfahren eignet sich also für die Herstellung zumindest teilweise vernetzter Polyacrylate. Es kann auf alle Verfahren zur Verarbeitung von Polyacrylaten, insbesondere Lösungsmittel- und Schmelzebeschichtungsverfahren sowie die Beschichtung disperser Systeme, übertragen werden.

Das Verfahren bietet in hervorragender, nicht zu erwartender Weise den Vorteil, dass ein stabiler Vernetzungsprozess für Polyacrylate ermöglicht wird, und zwar mit sehr guter Steuerungsmöglichkeit hinsichtlich des Vernetzungsgrads und somit der Kohäsion. Es kann vorzugsweise so geführt werden, dass auch die Adhäsionseigenschaften sehr gut sind.

Die vernetzten Polyacrylate können für alle möglichen Anwendungsgebiete eingesetzt werden, bei denen eine gewisse Kohäsion in der Masse erwünscht ist. Insbesondere günstig ist das Verfahren für viskoeleastische Materialien auf Polyacrylatbasis. Ein spezielles Anwendungsgebiet des erfindungsgemäßen Verfahrens ist die thermische Vernetzung von Haftklebemassen. Es eignet sich somit insbesondere zur Herstellung von Klebemassen und Klebebändern.

Das erfindungsgemäße Verfahren dient insbesondere zur thermischen Vernetzung von Polyacrylaten. Es kann von einem Polyacrylat, insbesondere von einem Polyacrylatcopolymer, auf Basis von Acrylsäureestern und/oder

Methacrylsäureestern ausgegangen werden, wobei zumindest ein Teil der Monomere, insbesondere Acrylsäureester und/oder Methacrylsäureester, funktionelle Gruppen, insbesondere Carboxygruppen, enthält, die mit Epoxidgruppen unter Bildung einer kovalenten Bindung reagieren können.

Wie oben beschrieben, schreiben die Erfinder dem Vernetzer eine Reihe von Vorteilen des erfindungsgemäßen Verfahrens zu. Der mindestens zweifach epoxidierte Vernetzer ist aus einer Gruppe ausgewählt, die Fettsäuren, Fettsäureester, Fettalkohole, Ester von Fettalkoholen und Kombinationen hiervon umfasst. Der Vernetzer leitet sich also von Fettsäuren bzw. Fettalkoholen ab. Fettalkohole können aus Fettsäuren hergestellt werden, sie tragen anstelle der Carbonsäuregruppe von Fettsäuren $-CH_2OH$ als Gruppe. Diese Verbindungen können insbesondere mit geringem Chlorgehalt hergestellt werden, sodass auch das vernetzte Polymer bzw. das vernetzte Polyacrylat mit geringem Chlorgehalt oder (nahezu) frei von Chlor erhalten werden kann. Hierin liegt ein wichtiger Vorteil gegenüber zahlreichen herkömmlichen Vernetzern.

Der Terminus Fettsäure umfasst im Rahmen der Anmeldung alle natürlichen gesättigten und ungesättigten aliphatischen Monocarbonsäuren mit unverzweigter oder verzweigter Kohlenstoffkette, die mindestens 6 C-Atome aufweist. In der Regel weist sie bis zu 24 C-Atome auf. Fettalkohole haben ebenso solche Ketten. Cyclische Carbonsäuren werden nicht zu den Fettsäuren gezählt. Da cyclische Carbonsäuren in der Regel ein steiferes Gerüst als Fettsäuren haben, führen sie oftmals zu steifen vernetzten Polymeren. Auf von cyclischen Carbonsäuren abgeleitete Vernetzer kann anmeldungsgemäß somit verzichtet werden.

Eine gesättigte Fettsäure ist- als Untergruppe der Alkansäuren - eine Fettsäure, die keine Doppelbindungen zwischen den C-Atomen aufweist. Die gesättigten Fettsäuren bilden eine homologe Reihe der Summenformel $C_nH_{2n+1}COOH$ mit n bevorzugt 6 bis 24. Als typische Beispiele für gesättigte Fettsäuren seien Dodecansäure (Laurinsäure), Hexadecansäure (Palminsäure) und Octadecansäure (Stearinsäure) genannt. Beispiele für verzweigte gesättigte Monocarbonsäure sind Phytansäure (3,7,11,15-Tetramethylhexadecansäure) und Mykolsäuren.

Ungesättigte Fettsäuren besitzen als Alkensäuren mindestens eine Doppelbindung. Mehrfach ungesättigte Fettsäuren besitzen zwei oder mehrere Doppelbindungen zwischen den C-Atomen der Kette.

Die Doppelbindungen natürlicher ungesättigter Fettsäuren liegen meist in einer *cis*-Konfiguration vor. Hierdurch entsteht ein Knick in der Kohlenwasserstoffkette, wodurch die Van-der-Waals-Wechselwirkungen zu anderen Molekülen abgeschwächt werden und der Schmelzpunkt meist verringert wird. Weiterhin sitzen die Doppelbindungen natürlicher ungesättigter Fettsäuren meist an bestimmten Positionen, weshalb diese dann auch als Omega-n-Fettsäuren bezeichnet werden. Hierbei steht n für eine Zahl und beschreibt die Position einer der Doppelbindungen. Bei der Omega-Zählweise wird vom "$\omega$-Ende" der Kohlenstoffkette aus gezählt, welches der Carboxygruppe der Fettsäure gegenüber steht. Für die Einteilung in die verschiedenen Gruppen der Omega-n-Fettsäuren ist nur die als erstes gezählte Doppelbindung entscheidend.

Neben ungesättigten Fettsäuren in der *cis*-Konfiguration kommen in der Natur auch Fettsäuren mit *trans*-konfigurierten Doppelbindungen vor, die *trans*-Fettsäuren. Bei industriell durchgeführten Isomerisierungsreaktionen der Doppelbindungen von Fettsäuren treten vermehrt *trans*-ständige Doppelbindungen auf.

Liegen mehrere Doppelbindungen in einer Fettsäure vor, sind diese in der Regel durch eine Methylengruppe, eine $CH_2$-Gruppe, voneinander getrennt. Es existieren jedoch auch konjugierte Fettsäuren, welche ebenfalls meist bei der industriellen Isomerisierung entstehen.

Die erfindungsgemäß eingesetzten Vernetzer können durch Epoxidierung der Doppelbindungen von Fettsäuren, Fettalkoholen bzw. den Estern hiervon hergestellt werden. Dies kann durch gängige, dem Fachmann an sich bekannte Verfahren geschehen. Zum Beispiel kann mit Peroxycarbonsäuren, z.B. *meta*-Chlorperbenzoesäure, sowie Kaliumpermanganat oder Mangan-basierten Katalysatoren, wie sie bei der enantioselektiven Jacobsen- oder Jacobsen-Katsuki-Epoxidierung eingesetzt werden, epoxidiert werden. Bevorzugt ist eine vollständige Epoxidierung der Doppelbindungen, da ansonsten die Alterungs- und Witterungsbeständigkeit der vernetzten Polymere geringer wird.

Beispiele für einfach und mehrfach ungesättigte Fettsäuren sind im Folgenden angeben. Der Vernetzer kann auf diesen, den davon abgeleiteten Fettalkoholen bzw. deren Ester nach deren Epoxidierung basieren. Hierbei sind auch beliebige Kombinationen möglich.

Beispiele für einfach gesättigte Fettsäuren sind (10*Z*)-Undeca-10-ensäure (Undecylensäure), (9*Z*)-Tetradeca-9-ensäure (Myristoleinsäure), (9*Z*)-Hexadeca-9-ensäure (Palmitoleinsäure), (6*Z*)-Octadeca-6-ensäure (Petroselinsäure), (9Z)-Octadeca-9-ensäure (Ölsäure), (9*E*)-Octadeca-9-ensäure (Elaidinsäure), (11*E*)-Octadeca-11-ensäure (Vaccensäure), (9*Z*)-Eicosa-9-ensäure (Gadoleinsäure), (11*Z*)-Eicosa-11-ensäure (Icosensäure), (11*Z*)-Docosa-11-ensäure (Cetoleinsäure), (13*Z*)-Docosa-13-ensäure (Erucasäure) und (15*Z*)-Tetracosa-15-ensäure (Nervonsäure).

Bevorzugt sind mehrfach ungesättigte Fettsäuren, wie beispielsweise (9*Z*,12*Z*)-Octadeca-9,12-diensäure (Linolsäure), (9*Z*,12*Z*,15*Z*)-Octadeca-9,12,15-triensäure (Alpha-Linolensäure), (6*Z*,9*Z*,12*Z*)-Octadeca-6,9, 12-triensäure (Gamma-Linolensäure), (8*E*,10*E*,12*Z*)-Octadeca-8,10,12-triensäure (Calendulasäure), (9*Z*,11*E*,13*Z*)-Octadeca-9,11,13-triensäure (Punicinsäure), (9*Z*,11*E*,13*E*)-Octadeca-9,11,13-triensäure (Alpha-Eleaostearinsäure), (9*E*,11*E*,13*E*)-Octadeca-9,11,13-triensäure (Beta-Eleaostearinsäure), (5*Z*,8*Z*,11*Z*,14*Z*)-Eicosa-5,8,11,14-tetraensäure (Arachidonsäure), (5*Z*,8*Z*,11*Z*,14*Z*,17*Z*)-Eicosa-5,8,11,14,17-pentaensäure (Timnodonsäure),

(7*Z*,10*Z*,13*Z*,16*Z*,19*Z*)-Docosa-7,10,13,16,19-pentaensäure (Clupanodonsäure) und (4*Z*,7*Z*,10*Z*,13*Z*,16*Z*,19*Z*)-Docosa-4,7,10,13,16,19-hexaensäure (Cervonsäure).

Es können auch Fettsäuren mit zusätzlichen funktionellen Gruppen, wie 12-(*R*),13-(*S*)-Epoxy-9-cis-Octadecensäure (Vernolsäure) und 12-Hydroxy-9-cis-octadecensäure (Rizinolsäure), eingesetzt werden.

Es können mindestens 60%, insbesondere mindestens 80%, bevorzugt mindestens 90% oder sämtliche, Epoxidgruppen des mindestens zweifach epoxidierten Vernetzers in den Fettsäureresten bzw. Fettalkoholresten des Vernetzers liegen.

Wie oben beschrieben, führen die Vernetzer zu vernetzten Polymeren bzw. Polyacrylaten mit guten Kohäsionseigenschaften und guten elastischen Eigenschaften, was vermutlich auf die langen Ketten der Fettsäuren und Fettalkohole in den Vernetzerverbindungen zurückgeführt werden kann.

Gemäß einer weiteren Ausführungsform weist eine Fettsäure bzw. ein Fettalkohol, auf dem der Vernetzter basiert, eine lineare oder eine verzweigte Kohlenstoffkette mit mindestens 8, insbesondere mindestens 10, und höchstens 24 C-Atomen auf. Weiter bevorzugt weisen diese eine lineare oder eine verzweigte Kohlenstoffkette mit mindestens 12 und höchstens 22 C-Atomen, besonders bevorzugt mit mindestens 16 und höchstens 18 C-Atomen auf. Selbiges gilt auch für Acylreste, die sich von den Fettsäuren ableiten.

Gemäß einer weiteren Ausführungsform ist der Vernetzer aus einer Gruppe ausgewählt, die Ester einer Fettsäure mit einem Fettalkohol, Fettsäureglyceride und Kombinationen hiervon umfasst. Ester einer Fettsäure mit einem Fettalkohol werden üblicherweise auch als Wachse bezeichnet. Die Fettsäureglyceride können Mono-, Di- und Triglyceride sein, wobei Di- und Triglyceride und insbesondere Triglyceride bevorzugt sind. Bei den Vernetzern kann es sich also um mindestens zweifach epoxidierte Wachse, Fette, Pflanzenöle und Kombinationen hiervon handeln. Wachse, Fette, Pflanzenöle sind vorteilhafterweise preisgünstig und in hoher Reinheit erhältlich. Sie können, wie oben beschrieben, epoxidiert werden, um den Vernetzer zu erhalten.

Weiter bevorzugt ist, dass der Vernetzer mindestens zwei von Fettsäuren- und/oder Fettalkoholen abgeleitete Gruppen aufweist, die jeweils mindestens einfach epoxidiert sind. Hierdurch wird eine sehr gute Flexibilität und Elastizität der vernetzten Polymere bzw. Polyacrylate ermöglicht. Des Weiteren zeigen die vernetzen Polymere auch ein sehr gutes Auffließverhalten. Die Erfinder vermuten, dass dies auf die besonders flexiblen Vernetzungen über den Vernetzer zurückzuführen ist. Das vernetzte Polymer fließt auch sehr gut auf ausgesprochen unpolare Oberflächen, zum Beispiel Polyethylen, auf. Hierdurch kann eine hohe Klebkraft auf unpolaren Oberflächen erhalten werden.

Gemäß einer weiteren Ausführungsform umfasst der Vernetzer mindestens ein Fettsäureglycerid der allgemeinen Formel (I) oder er besteht daraus:

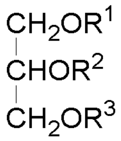

(I)

Hierbei sind die Substituenten $R^1$, $R^2$ und $R^3$ jeweils unabhängig voneinander aus H, Acylrest und Acylrest einer Fettsäure ausgewählt. Die "Acylreste" fallen nicht unter die "Acylreste einer Fettsäure". Es ist mindestens einer, insbesondere sind mindestens zwei und bevorzugt alle drei, der Substituenten $R^1$, $R^2$ und $R^3$ ein jeweils unabhängig gewählter Acylrest einer Fettsäure. Die Substituenten $R^1$, $R^2$ und $R^3$ können also auch Acylreste gleicher, teilweise gleicher oder vollständig verschiedener Fettsäuren sein. Es können beispielsweise Acylreste der oben aufgezählten, insbesondere ungesättigten und mehrfach ungesättigten, Fettsäuren sein, die natürlich zuvor epoxidiert wurden. Acylreste einer Fettsäure haben wie oben beschrieben eine Kettenlänge von 6 bis 24, insbesondere 10 bis 24, bevorzugt 12 bis 22 und besonders bevorzugt 16 bis 18, C-Atomen. Des Weiteren sind bevorzugt mindestens zwei und besonders bevorzugt alle Substituenten $R^1$, $R^2$ und $R^3$ mindestens einfach epoxidiert.

Ein erfindungsgemäß eingesetzter Vernetzer kann insbesondere mindestens drei, vorzugsweise mindestens vier Epoxidgruppen umfassen. Ein solcher Vernetzer ermöglicht aufgrund der zahlreichen Epoxidgruppen eine gute Vernetzung, was sich auch in guten Kohäsionseigenschaften äußert. Gleichzeitig bleibt das vernetzte Polymer jedoch elastisch und flexibel. Das heißt trotz einer starken lokalen Vernetzung weisen die Vernetzungspunkte gute elastische Eigenschaften auf.

Gemäß einer weiteren Ausführungsform umfasst der Vernetzer ein Fettsäureglycerid der Formel (I), wobei zwei oder drei Substituenten $R^1$, $R^2$ und $R^3$ jeweils unabhängig voneinander ausgewählte Acylreste einer ggf. unterschiedlichen Fettsäure sind. Der Vernetzer kann auch nur aus solchen Di- und/oder Triglyceriden bestehen. Die Di- und Triglyceride dieser Ausführungsform sind insbesondere mindestens dreimal und bevorzugt mindestens viermal epoxidiert. Hierbei kann es sich bevorzugt um epoxidierte Fette und/oder Pflanzenöle handeln, beispielsweise epoxidiertes Leinsamenöl und/oder epoxidiertes Sojabohnenöl.

Die bevorzugt verwendeten epoxidierten Öle und Fette sind meist Gemische aus mehreren unterschiedlichen

Fettsäureglyceriden, wobei das Massenverhältnis von Tri- zu Di- zu Monoacylglyceriden etwa 96:3:1 beträgt, und die Acylgruppen wiederum auf unterschiedlichen Fettsäuren basieren können.

Beispiele für kommerziell verfügbare epoxidierte Pflanzenöle, die in dem erfindungsgemäßen Verfahren verwendet werden können, sind das auf Sojabohnenöl basierende Vikoflex® 7170 (Fa. Arkema) und die Merginat® ESBO-Typen (Fa. Hobum Oleochemicals) sowie das auf Leinsamenöl basierende Vikoflex® 7190 (Fa. Arkema) und die Merginat® ELO-Typen (Fa. Hobum Oleochemicals). Beispiele für kommerziell verfügbare epoxidierte, einfach veresterte Fettsäuren sind die auf Sojabohnenöl basierende Vikoflex® 7000er-Serie sowie die auf Leinsamenöl basierende Vikoflex® 9000er-Serie.

Gegebenenfalls können die oben beschriebenen erfindungsgemäß eingesetzten Vernetzer mit weiteren Vernetzern in dem Verfahren kombiniert werden. Beispiele für weitere Vernetzer sind konventionellen Epoxid- und andere thermische Vernetzer, wie Oxetane, Isocyanate, Oxazoline, Carbodiimide und Metallchelate. Auf diese Vernetzer kann auch verzichtet werden. Des Weiteren kann eine Kombination mit für photochemisch oder mittels Elektronenstrahl induzierte Vernetzungsmechanismen geeigneten Vernetzern erfolgen.

Gemäß einer weiteren Ausführungsform wird der mindestens zweifach epoxidierte Vernetzer zu 0,1 bis 5 Gew-%, bezogen auf das Polyacrylat mit mindestens einer Carboxygruppe, eingesetzt. Optionale Additive, wie beispielsweise unten beschrieben, werden hierbei nicht berücksichtigt.

Gemäß einer weiteren Ausführungsform wird der Vernetzeranteil derart gewählt, dass ein elastischer Anteil der vernetzten Polymere bzw. vernetzten Polyacrylate von mindestens 20% resultiert. Bevorzugt beträgt der elastische Anteil mindestens 40%, weiter bevorzugt mindestens 60% (jeweils gemessen nach Messmethode H3).

Die zu vernetzenden Polyacrylate enthalten funktionelle Gruppen, die geeignet sind, mit Epoxidgruppen Verknüpfungsreaktionen, insbesondere im Sinne von Additions- oder Substitutionsreaktionen, einzugehen. Als funktionelle Gruppe sind Carboxygruppen bevorzugt, weswegen das Polyacrylat mindestens eine Carboxygruppe aufweist. Carboxygruppen können Epoxide auch im gewissen Maße, zum Beispiel über Wasserstoffbrücken, aktivieren. Neben der mindestens einen Carboxygruppe kann das Polyacrylat weitere nucleophile Gruppen, wie beispielsweise Hydroxy-, primäre und sekundäre Amino-, Thiol-, Sulfonat-, Phosphan- und Phosphonsäuregruppen sowie Phenole, aufweisen.

Bei einem eingesetzten Polyacrylat kann es sich um ein Polymerisat handeln, welches durch beispielsweise radikalische Polymerisation von Acrylmonomeren, worunter auch Methylacrylmonomere verstanden werden, und gegebenenfalls weiteren, copolymerisierbaren Monomeren erhältlich ist.

Es werden als Monomere oder Comonomere zumindest teilweise funktionelle, mit Epoxidgruppen vernetzungsfähige Monomere eingesetzt, von denen zumindest eines eine Carboxygruppe aufweist. Jedoch sind auch Monomere mit weiteren mit Epoxiden reagierenden Funktionalitäten, z.B. Säuregruppen (Sulfonsäure- oder Phosphonsäuregruppen) und/oder Hydroxygruppen und/oder Säureanhydridgruppen und/oder Aminogruppen, möglich. Bevorzugt sind carbonsäuregruppenhaltige Monomere. Es ist insbesondere vorteilhaft, wenn das Polyacrylat einpolymerisierte Acrylsäure und/oder Methacrylsäure aufweist.

Weitere Monomere, die als Comonomere für das Polyacrylat verwendet werden können, sind z.B. Acrylsäure- und/oder Methacrylsäureester mit bis zu 20 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomere.

Für das erfindungsgemäße Verfahren wird vorzugsweise ein Polyacrylat eingesetzt, welches auf die unten beschriebene Monomerenmischung (a), (b) und optional (c), enthaltend insbesondere weich machende Monomere, weiterhin Monomere mit funktionellen Gruppen, die in der Lage sind, mit den Epoxidgruppen Reaktionen einzugehen, insbesondere Additions- und/oder Substitutionsreaktionen, sowie optional weitere einpolymerisierbare Comonomere, insbesondere hartmachende Monomere. Die Natur des vernetzten Polyacrylats, beispielsweise eine Haftklebemasse; Heißsiegelmasse oder viskoelastisches nichtklebriges Material, lässt sich insbesondere über eine Variation der Glasübergangstemperatur des Polymers durch unterschiedliche Gewichtsanteile der einzelnen Monomere beeinflussen.

Zur Erzielung von Polymeren, beispielsweise für Haftklebemassen oder Heißsiegelmassen, mit gewünschten Glasübergangstemperaturen $T_G$ wird die mengenmäßige Zusammensetzung der Monomerenmischung vorteilhaft derart gewählt, dass sich nach einer Gleichung (G1) in Analogie zur Fox-Gleichung (vgl. T.G. Fox, Bull. Am. Phys. Soc. 1956, 1, 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew-%) und $T_{G,n}$ die jeweilige Glasübergangstemperatur des Homopolymers aus den jeweiligen Monomeren n in K.

Gemäß einer weiteren Ausführungsform wird als Polyacrylat mit mindestens einer Carboxygruppe ein Polyacrylat verwendet, das auf einer Monomerenzusammensetzung basiert, die

(a) Acrylsäurealkylester und/oder Methacrylsäurealkylester der folgenden Formel

$$CH_2 = C(R^I)(COOR^{II}),$$

wobei $R^I$ = H oder $CH_3$ und $R^{II}$ ein Alkylrest mit 1 bis 20, insbesondere 1 bis 18, C-Atomen ist,
(b) ein oder mehrere olefinisch ungesättigte Monomere mit funktionellen Gruppen, die für die Reaktion mit den Epoxidgruppen des Vernetzers geeignet sind, wobei zumindest eines der Monomere eine Carboxygruppe aufweist,
(c) optional weitere Acrylate und/oder Methacrylate und/oder olefinisch ungesättigte Monomere, die mit den Monomeren (a) und (b) copolymerisierbar sind und nicht unter die Monomere (a) und (b) fallen,

umfasst.

Zur Anwendung des vernetzten Polyacrylats als Haftkleber bzw. Haftklebemasse sind die Anteile der entsprechenden Komponenten (a), (b) und (c) derart gewählt, dass das Polymerisationsprodukt insbesondere eine statische Glastemperatur ≤ 15 °C (gemessen mittels DSC, Messmethode A4) aufweist.

Es ist zur Herstellung von vernetzten Haftklebemassen sehr vorteilhaft, die Monomere der Komponente (a) mit einem Anteil von 45 bis 99 Gew-%, die Monomere der Komponente (b) mit einem Anteil von 1 bis 15 Gew-% und die Monomere der Komponente (c) mit einem Anteil von 0 bis 40 Gew-% zu wählen. Die Angaben beziehen sich auf die Comonomermischung für das Polymer, also ohne Zusätze und ohne eventuelle Additive.

Für die Anwendung eines Heißschmelzklebers, also eines Materials, welches erst durch Erwärmen haftklebrig wird, werden die Anteile der entsprechenden Komponenten (a), (b), und (c) insbesondere derart gewählt, dass das Copolymer eine Glasübergangs-temperatur $T_G$ zwischen 15 °C und 100 °C, bevorzugt zwischen 30 °C und 80 °C, besonders bevorzugt zwischen 40 °C und 60 °C, aufweist. Die Anteile der Komponenten (a), (b), und (c) sind entsprechend zu wählen. Bevorzugt werden die Monomere der Komponente (a) mit einem Anteil von 50 bis 99 Gew-%, die Monomere der Komponente (b) mit einem Anteil von 1 bis 20 Gew-% und die Monomere der Komponente (c) mit einem Anteil von 0 bis 30 Gew-% gewählt.

Ein viskoelastisches Trägermaterial, was beispielsweise typischerweise beidseitig mit haftklebrigen Schichten kaschiert sein kann, hat insbesondere eine Glasübergangstemperatur ($T_G$) zwischen - 50 °C bis +100 °C, bevorzugt zwischen -40 °C bis + 60°C, besonders bevorzugt -30 °C bis 40 °C. Die Anteile der Komponenten (a), (b), und (c) sind auch hier entsprechend zu wählen. Bevorzugt werden die Monomere der Komponente (a) mit einem Anteil von 45 bis 99 Gew-%, die Monomere der Komponente (b) mit einem Anteil von 1 bis 15 Gew-% und die Monomere der Komponente (c) mit einem Anteil von 0 bis 40 Gew-% gewählt.

Die Monomere der Komponente (a) sind insbesondere weichmachende und/oder unpolare Monomere. Als Monomere (a) werden Acrylmonomere eingesetzt, die aus Acryl- und Methacrylsäureester mit Alkylgruppen, mit 1 bis 20 C-Atomen, insbesondere 1 bis 18 C-Atomen und bevorzugt 4 bis 9 C-Atomen, ausgewählt sind. Beispiele für derartige Monomere sind Methylacrylat, Ethylacrylat, Propylacrylat, Methylmethacrylat, Ethylmethacrylat, n-Butylacrylat, n-Butylmethacrylat, sec-Butylacrylat, *tert*-Butylacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat sowie deren verzweigten Isomere, wie z.B. 2-Ethylhexylacrylat und 2-Ethylhexylmethacrylat, Dodecylmethacrylat, Isodecylacrylat, Laurylacrylat, n-Undecylacrylat, Stearylacrylat und Kombinationen hiervon.

Die Monomere der Komponente (b) sind insbesondere olefinisch ungesättigte Monomere mit funktionellen Gruppen, insbesondere mit funktionellen Gruppen, die eine Reaktion mit den Epoxidgruppen eingehen können.

Für die Komponente (b) werden Monomere mit solchen funktionellen Gruppen eingesetzt, die aus der folgenden Aufzählung ausgewählt sind: Carboxygruppen sowie ggf. Hydroxy-, Sulfonsäure-, oder Phosphonsäuregruppen, Säureanhydride und Amine. Die Monomere der Komponente (b) sind beispielsweise aus Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, 3-Hydroxypropylacrylat, Hydroxyethylmethacrylat, 3-Hydroxypropylmethacrylat, 6-Hydroxyhexylmethacrylat, Allylalkohol, Diethylaminoethylacrylat, Diethylaminoethylmethacrylat, Dimethylaminoethylacrylat, Dimethylaminoethylmethacrylat und Kombinationen hiervon ausgewählt.

Prinzipiell können im Sinne der Komponente (c) alle vinylisch-funktionalisierten Verbindungen eingesetzt werden, die mit der Komponente (a) und/oder der Komponente (b) copolymerisierbar sind. Sie können auch zur Einstellung der Eigenschaften einer resultierenden Haftklebemasse dienen.

Die Monomere für die Komponente (c) können beispielsweise aus Benzylacrylat, Benzylmethacrylat, Phenylacrylat, Phenylmethacrylat, Isobornylacrylat, Isobornylmethacrylat, *tert*-Butylphenylacrylat, *tert*-Butylaphenylmethacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfurylacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Glycidylacrylat, Glycidylmethacrylat, Dimethylaminopropylacrylamid, Dimethylaminopropylmethacrylamid, *N*-(1-Methyl-undecyl)acrylamid, *N*-(n-Butoxymethyl)-acrylamid, *N*-(Butoxymethyl)methacrylamid, *N*-(Ethoxymethyl)acrylamid, *N*-(n-Octadecyl)-acrylamid, weiterhin *N,N*-Dialkyl-substituierte Amide, wie beispielsweise *N,N*-Dimethylacrylamid, *N,N*-Dimethylmethacrylamid, *N*-Benzylacrylamide, *N*-Isopropylacrylamid, N-*tert*-Butylacrylamid, *N*-tert-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylpyridin, 4-Vinylpyridin, *N*-Vinylphthalimid, *N*-Vinyllactam, *N*-Vinylpyrrolidon, Styrol, a- und p-Methylstyrol, a-Butylstyrol, 4-n-Butylstyrol, 4-n-Decylstyrol, 3,4-Dimethoxystyrol. Makromonomere wie 2-Polystyrolethylmethacrylat (Molekulargewicht $M_w$ von 4.000 bis 13.000 g/mol), Poly(methylmethacrylat)ethylmethacrylat ($M_w$ von 2.000 bis 8.000 g/mol) und Kombinationen hiervon ausgewählt sein.

Monomere der Komponente (c) können ergänzend hierzu oder alternativ auch derart gewählt werden, dass sie funktionelle Gruppen enthalten, die eine nachfolgende strahlenchemische Vernetzung, beispielsweise durch Elektronenstrahlen oder UV, unterstützen. Geeignete copolymerisierbare Photoinitiatoren sind z.B. Benzoinacrylat und acryloxyfunktionalisierte Benzophenonderivate. Monomere, die eine Vernetzung durch Elektronenbestrahlung unterstützen, sind z.B. Tetrahydrofurfurylacrylat, *N-tert*-Butylacrylamid, Allylacrylat.

Die durchschnittlichen gewichtsmittleren Molekulargewichte $M_W$ der Polyacrylate liegen bevorzugt in einem Bereich von 20.000 bis 2.000.000 g/mol; sehr bevorzugt in einem Bereich von 100.000 bis 1.500.000 g/mol, äußerst bevorzugt in einem Bereich von 150.000 bis 1.000.000 g/mol. Die Angaben des mittleren Molekulargewichtes $M_W$ und der Polydisperistät PD in dieser Schrift beziehen sich auf die Bestimmung per Gelpermeationschromatographie (siehe Messmethode A2; experimenteller Teil). Es kann vorteilhaft sein, die Polymerisation in Gegenwart geeigneter Polymerisationsregler wie Thiolen, Halogenverbindungen und/oder Alkoholen durchzuführen, um das gewünschte mittlere Molekulargewicht einzustellen.

Das Polyacrylat hat vorzugsweise einen K-Wert von 30 bis 90, besonders bevorzugt von 40 bis 80, gemessen in Toluol (1%ige Lösung, 21 °C). Der K-Wert nach Fikentscher ist ein Maß für das Molekulargewicht und die Viskosität des Polymers.

Gemäß einer weiteren Ausführungsform umfasst das Verfahren die Schritte:

- Erzeugen eines Polyacrylats, das mindestens eine Carboxygruppe umfasst,
- Versetzen mit dem mindestens zweifach epoxidierten Vernetzer, optional Versetzen mit mindestens einem Beschleuniger und optional Versetzen mit mindestens einem Additiv, wodurch eine Polymermasse erhalten wird, die das Polymer umfasst,
- Formgebung der Polymermasse, und
- insbesondere thermisches Vernetzen des Polyacrylats in der Polymermasse mit dem mindestens zweifach epoxidierten Vernetzer.

Die Verfahrensschritte werden bevorzugt in dieser Reihenfolge durchgeführt, wobei sie sich jedoch überlappen können. Beispielsweise kann schon während des Versetzens und/oder der Formgebung eine Vernetzung einsetzen und später abgeschlossen werden. Die Verarbeitungszeit kann, wie oben beschrieben, mit Vorteil so gewählt werden, dass die Polymermasse ohne weiteres in Form gebracht, beispielsweise gleichmäßig auf einen Träger geschichtet, werden kann. Sofern Beschleuniger und/oder ein oder mehrere Additive zugegeben werden, kann die Reihenfolge des Versetzens beliebig sein.

Die Erzeugung des Polymers bzw. des Polyacrylats schließt auch das Bereitstellen eines solchen Polymers mit ein. Die Erzeugung kann nach dem Fachmann geläufigen Verfahren geschehen. Insbesondere können konventionelle radikalische Polymerisationen oder kontrollierte radikalische Polymerisationen hierzu verwendet werden. Die Polymere bzw. Polyacrylate können durch Copolymerisation der monomeren Komponenten unter Verwendung der üblichen Polymerisationsinitiatoren sowie gegebenenfalls von üblichen Reglern hergestellt werden. Es kann bei üblichen Temperaturen in Substanz, in Emulsion, z.B. in Wasser oder flüssigen Kohlenwasserstoffen, oder in Lösung polymerisiert werden. Hierbei werden insbesondere nicht miteinander vernetzte Polymerstränge erhalten.

Vorzugsweise werden die Polyacrylate durch Polymerisation der Monomere in Lösungsmitteln, insbesondere in Lösungsmitteln eines Siedebereichs von 50 bis 150 °C, vorzugsweise von 60 bis 120 °C, unter Verwendung der üblichen Mengen an Polymerisationsinitiatoren, die im allgemeinen bei 0,01 bis 5, insbesondere bei 0,1 bis 2 Gew-% (bezogen auf das Gesamtgewicht der Monomere) liegen, hergestellt.

Prinzipiell eignen sich alle dem Fachmann geläufigen, für Acrylate übliche Initiatoren. Beispiele für Radikalquellen sind Peroxide, Hydroperoxide und Azoverbindungen, z.B. Dibenzoylperoxid, Cumolhydroperoxid, Cyclohexanonperoxid, Di-*tert*-butylperoxid, Cyclohexylsulfonylacetylperoxid, Diisopropylpercarbonat, *tert*-Butylperoktoat, Benzpinacol. In einer sehr bevorzugten Vorgehensweise wird als radikalischer Initiator 2,2'-Azobis(2-methylbutyronitril) (Vazo® 67™ der Fa. DuPont) oder 2,2'-Azobis(2-methylpropionitril) (2,2'-Azobisisobutyronitril; AIBN; Vazo® 64™ der Fa. DuPont) verwendet.

Gemäß einer weiteren Ausführungsform wird in Lösung also in Gegenwart eines Lösungsmittels polymerisiert. Als Lösungsmittel kommen z.B. Alkohole, wie Methanol, Ethanol, n-und Isopropanol, n-und Isobutanol, vorzugsweise Isopropanol und/oder Isobutanol, sowie Kohlenwasserstoffe, z.B. Toluol, und insbesondere Benzine eines Siedebereichs von 60 bis 120 °C in Frage. Des Weiteren können insbesondere Ketone, wie vorzugsweise Aceton, Methylethylketon und Methylisobutylketon, und Ester, wie Essigsäureethylester, sowie Gemische von den genannten Lösungsmitteln dieser Art eingesetzt werden. Hierbei sind Gemische, die Isopropanol, insbesondere in Mengen von 2 bis 15 Gew-%, bevorzugt 3 bis 10 Gew-%, bezogen auf das eingesetzte Lösungsgemisch enthalten, bevorzugt.

Durch die hier beispielhaft angegebenen Polymerisationsverfahren können Polyacrylate, wie sie oben beschrieben sind, erzeugt werden. Hinsichtlich der Monomerenzusammensetzung, insbesondere mit den Monomeren der Komponenten (a), (b) und optional (c), des gewichtsmittleren Molekulargewichts, des K-Werts und der Glasübergangstemperatur der Polymere wird ausdrücklich auf die obigen Ausführungen verwiesen.

Gemäß einer weiteren Ausführungsform wird mit mindestens einem Beschleuniger versetzt, wobei der Beschleuniger aus einem sauren Katalysator, der eine Brønsted-Säure, eine Lewis-Säure oder Kombinationen hiervon umfasst, oder einer Base ausgewählt ist.

Herkömmliche Vernetzer, insbesondere herkömmliche kurzkettige Epoxide, reagieren ohne entsprechende Katalysatoren oder Beschleuniger nur unter Wärmeeinfluss mit Carboxygruppen und zwar insbesondere erst nach längerer Zufuhr von thermischer Energie. Das heißt, sie sind reaktionsträge. Ein Beschleuniger sorgt im Falle von reaktionsträgen Vernetzern dafür, dass die Vernetzung überhaupt mit hinreichender Reaktionsgeschwindigkeit abläuft. Ein Beschleuniger sorgt also für eine Verbesserung der Reaktionskinetik der Vernetzungsreaktion. Dies kann auf katalytische Weise oder auch durch Einbindung in das Reaktionsgeschehen erfolgen.

Die erfindungsgemäß eingesetzten Vernetzer können ohne Beschleuniger umgesetzt werden. Es können jedoch Beschleuniger zur Modifikation der Vernetzungsgeschwindigkeit hilfreich sein, um beispielsweise Lagerzeiten zur Vernetzung etwas zu verkürzen. Die Verarbeitungszeit kann auch mit Beschleunigern gesteuert werden.

Die Reaktion zwischen einer Carboxygruppe und einem Epoxid kann durch Aktivierung des Epoxids und/oder durch Aktivierung der Carboxygruppe erfolgen. Die Aktivierung kann auch durch funktionelle Gruppen, die im Polymer enthalten sind, durch die Reaktanden an sich (Autokatalytischer Mechanismus im Falle der Carboxygruppe, die sowohl mit dem Epoxid reagiert als auch als auch über Wasserstoffbrückenbindungen das Epoxid aktivieren kann) oder optional durch Zugabe von Beschleunigern erfolgen.

Der Beschleuniger kann aus einer Brønsted-Säure und/oder einer Lewis-Säure sowie Kombinationen hiervon ausgewählt sein. Diese aktivieren ein Epoxid und werden beispielsweise bei Polymeren in Lösung oder in (wässerigen) Dispersionen verwendet. Hierfür können auch erhöhte Temperaturen eingesetzt werden. Diese Katalysatoren bzw. Beschleuniger weisen teilweise auch erst nach Entfernen des Lösungsmittels die nötige Acidität auf. Als Lewis-Säuren können zum Beispiel $ZnCl_2$, $SnCl_2$, $AlCl_3$, $FeCl_3$, sowie organische Lewis-Säuren wie Ammonium-, Imidazolium- und Phosphoniumsalze eingesetzt werden. Zur Aktivierung mittels Brønsted-Säuren können zum Beispiel schwache anorganische oder organische Säuren eingesetzt werden.

In Hotmeltprozessen führen saure Katalysatoren oder Beschleuniger zu einer Verbesserung der Reaktionskinetik im Temperaturbereich der Schmelze, aber bei fehlender Zufuhr von thermischer Energie von außen (also beispielsweise bei Raumtemperatur) kann die Reaktivität der Epoxide auch in Gegenwart der Katalysatoren bzw. Beschleuniger absinken. Dies kann dann ein Problem sein, wenn die als Hotmelt verarbeiteten Polyacrylate innerhalb relativ kurzer Zeiträume (einige Minuten) beschichtet werden und dann mangels weiterer Wärmezufuhr rasch bis zur Raumtemperatur bzw. Lagerungstemperatur abkühlen.

Als Beschleuniger können Basen eingesetzt werden. Diese aktivieren die Carboxygruppe. Es können anorganische und/oder organische Basen eingesetzt werden. Bevorzugt werden organische Basen eingesetzt, die nur eine schwache Nucleophilie aufweisen, da ansonsten die Reaktion der Base mit dem Epoxid in Konkurrenz zur Aktivierung der Carboxygruppe tritt, und der Vernetzer abreagieren kann, ohne zum Aufbau eines kovalenten Netzwerkes beizutragen.

Bevorzugt wird als Beschleuniger eine Stickstoffbase eingesetzt. Diese kann aus den folgenden Gruppen und Kombinationen von diesen Gruppen ausgewählt sein.

Die Stickstoffbasen können beispielsweise aus primären ($NRH_2$), sekundären ($NR_2H$) und tertiären Amine ($NR_3$) ausgewählt werden. Selbstverständlich können auch solche, die mehrere primäre und/oder sekundäre und/oder tertiäre Aminogruppen aufweisen, zum Einsatz kommen. Besonders bevorzugte Katalysatoren oder Beschleuniger sind aber - insbesondere in Verbindung mit den vorgenannten Gründen - tertiäre Amine, wie beispielsweise Triethylamin, Triethylendiamin, Benzyldimethylamin, Dimethylaminomethylphenol, 2,4,6-Tris-(*N,N*-dimethylamino-methyl)phenol,

*N,N'*-Bis(3-(dimethyl-amino)propyl)harnstoff.

Die Stickstoffbasen können beispielsweise aus multifunktionellen Aminen wie Diaminen, Triaminen und/oder Tetraminen ausgewählt sein. Hervorragend geeignet sind zum Beispiel Diethylentriamin, Triethylentetramin und Trimethylhexamethylendiamin.

Die Stickstoffbasen können insbesondere aus Pyridin, Imidazolen (wie beispielsweise 2-Methylimidazol), 1,8-Diazabicyclo[5.4.0]undec-7-en und Ammoniumcarbamat ausgewählt sein. Auch cycloaliphatische Polyamine können hervorragend als Beschleuniger eingesetzt werden.

Als Beschleuniger sind auch Basen auf Phosphorbasis, zum Beispiel Triphenylphosphin, geeignet.

Weiterhin geeignet sind anorganische Basen wie beispielsweise KOH, NaOH, $KHCO_3$ und $K_2CO_3$.

Die Aktivierung der Carboxygruppe, bevorzugt mittels einer oder mehrerer Stickstoffbasen, ist insbesondere für die Verarbeitung thermisch vernetzbarer Polymerhotmelts, insbesondere Polyacrylathotmelts, vorteilhaft, kann jedoch auch bei Polymeren, die aus Lösung oder wässeriger Dispersionen beschichtet werden, zur Aktivierung der Vernetzung eingesetzt werden, wobei es durch die Säure-Base-Reaktion zwischen der Base und den Carbonsäuregruppen häufig zu einem Anstieg der Viskosität kommt. Insbesondere kann mit den mittels Hotmeltverfahren verarbeiteten Polyacrylaten bei Kombination des erfindungsgemäß eingesetzten Vernetzers mit einem basischen Katalysator oder Beschleuniger mit ausreichender Topfzeit, blasen- und streifenfrei beschichtet werden. Es kann nach Abkühlung auf Raumtemperatur (RT, 20 °C) oder auf eine Temperatur nahe der Raumtemperatur weiter vernetzt werden. Insbesondere kann in dieser Phase der Vernetzung auf Beheizung verzichtet werden, ohne dass dies zu einem Abbruch der Vernetzungsreaktion führen würde.

Gemäß einer weiteren Ausführungsform wird der Beschleuniger zu 0,05 - 5 Gew-%, bezogen auf das Polymer ohne etwaige Additive, zuzugeben.

Gemäß einer weiteren Ausführungsform wird mit mindestens einem Additiv versetzt, wobei die Additive aus einer Gruppe ausgewählt sind, die klebrigmachende Harze, Füllstoffe, Additive zur Volumenerhöhung, Schutzmittel, Compoundierungsmittel, Farbstoffe, Pigmente, Weichmacher, weitere Polymere und Kombinationen hiervon umfasst. Durch die Additive können die vernetzten Polyacrylate,für verschiedene Anwendungszwecke modifiziert werden.

Gemäß einer weiteren Ausführungsform wird mit einem klebrigmachenden Harz versetzt. Es kann dem Polyacrylat, im Wesentlichen vor der thermischen Vernetzung zumindest ein klebrigmachendes Harz beigemischt werden. Als klebrigmachende Harze sind die vorbekannten und in der Literatur beschriebenen Harze einsetzbar. Insbesondere sei verwiesen auf aliphatische, aromatische, alkylaromatische Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt werden als klebrigmachende Harze Pinen-, Inden- und Kolophoniumharze sowie deren disproportionierte, hydrierte, polymerisierte, veresterte Derivate und Salze, Terpenharze und Terpenphenolharze sowie C5-, C9- und andere Kohlenwasserstoffharze eingesetzt. Auch Kombinationen dieser und weiterer Harze können vorteilhaft eingesetzt werden, um die Eigenschaften des vernetzten Polymers, insbesondere einer resultierenden Klebmasse, wunschgemäß einzustellen. Besonders bevorzugt lassen sich alle mit einem entsprechenden Polyacrylat kompatiblen (löslichen) Harze einsetzen. In einer besonders bevorzugten Vorgehensweise werden Terpenphenolharze und/oder Kolophoniumester hinzugesetzt. Durch Zugabe von klebrigmachenden Harzen wird die Anfassklebrigkeit (Tack) der vernetzten Polymere bzw. Polyacrylate erhöht. Diese können insbesondere als Haftklebemasse verwendet werden. Hierfür werden sie in der Regel auf einen Träger geschichtet, sodass ein (Haft-)Klebeband erhalten wird.

Des Weiteren können optional auch pulver- und granulatförmige Füllstoffe, Farbstoffe und Pigmente, insbesondere auch abrasive und verstärkende Füllstoffe, wie z.B. Kreiden ($CaCO_3$), Titandioxide, Zinkoxide und Ruße auch zu hohen Anteilen, das heißt von 1 bis 50 Gew-%, bezogen auf die Gesamtrezeptur, hervorragend in die Polyacrylatschmelze dosiert, homogen eingearbeitet und beispielsweise an einem 2- oder 3-Walzenauftragswerk beschichtet werden. Hier versagen oftmals die konventionellen Verfahren aufgrund der sehr hohen Viskosität der Polymermasse ("Gesamtcompounds").

Sehr bevorzugt können auch verschiedene Kreideformen als Füllstoff eingesetzt werden, wobei besonders bevorzugt Mikrosöhl-Kreide eingesetzt wird. Bei bevorzugten Anteilen von bis zu 30 Gew-% verändern sich die klebtechnischen Eigenschaften (Scherfestigkeit bei RT, Sofortklebkraft auf Stahl und PE) durch den Füllstoffzusatz praktisch nicht.

Weiterhin können auch schwerentflammbare Füllstoffe, wie beispielsweise Ammoniumpolyphosphat, elektrisch leitfähige Füllstoffe, wie beispielsweise Leitruß, Kohlenstofffasern und/oder silberbeschichtete Kugeln, thermisch leitfähige Materialien, wie beispielsweise Bornitrid, Aluminiumoxid und Siliciumcarbid, ferromagnetische Additive, wie beispielsweise Eisen-(III)-oxide, und Kombinationen hiervon eingesetzt werden.

Gemäß einer weiteren Ausführungsform werden Additive zur Volumenerhöhung eingesetzt. Diese dienen insbesondere zur Herstellung geschäumter Schichten bzw. syntaktischer Schäume. Es können beispielsweise Blähmittel, Glasvollkugeln, Glashohlkugeln, carbonisierte Mikrokugeln, phenolische Mikrohohlkugeln, Mikrokugeln aus anderen Materialien, expandierbare Microballons (z.B. Expancel® der Fa. AkzoNobel und Microsphere® der Fa. Matsumoto Yushi Seiyaku Co., Japan), Kieselsäure, Silicate, organisch nachwachsende Rohstoffe, wie beispielsweise

Holzmehl, organische und/oder anorganische Nanopartikel, Fasern und Kombinationen hiervon eingesetzt werden.

Weiterhin können auch Schutzmittel, wie zum Beispiel Alterungsschutzmittel, Lichtschutzmittel, Ozonschutzmittel, oder Compoundierungsmittel zugegeben bzw. eincompoundiert werden. Als Alterungsschutzmittel können bevorzugt sowohl primäre, z.B. 4-Methoxyphenol oder Irganox® 1076, als auch sekundäre Alterungsschutzmittel, z.B. Irgafos® TNPP oder Irgafos® 168 der Fa. BASF, auch in Kombination miteinander eingesetzt werden. Es wird an dieser Stelle auf weitere entsprechende Irganox® Typen der Fa. BASF bzw. Hostanox® der Firma Clariant verwiesen. Als weitere hervorragende Mittel gegen Alterung können Phenothiazin (C-Radikalfänger) sowie Hydrochinonmethylether in Gegenwart von Sauerstoff sowie Sauerstoff selbst eingesetzt werden.

Des Weiteren können Weichmacher zugesetzt werden. Weichmacher (Plastifizierungsmittel) können insbesondere in Konzentrationen von bis zu 5 Gew-%, zugesetzt werden. Als Weichmacher können beispielsweise niedermolekulare Polyacrylate, Phthalate, wasserlösliche Weichmacher, Weichharze, Phosphate, Polyphosphate, 1,2-Cyclohexandicarbonsäurediester, Adipate und/oder Citrate zudosiert werden.

Weiterhin optional kann insbesondere ein thermisch vernetzbares Polyacrylathotmelt auch mit anderen Polymeren versetzt, also geblendet bzw. abgemischt werden. Hierzu eignen sich andere Polymere auf Basis von Naturkautschuk, Synthesekautschuk, Styrolblockcopolymere, EVA, Siliconkautschuk, Acrylkautschuk, Polyvinylether. Hierbei erweist es sich als zweckmäßig, diese anderen Polymere in granulierter oder andersartig zerkleinerter Form dem Polyacrylathotmelt vor Zugabe des Vernetzers zuzusetzen. Die Herstellung der Polymerblends kann in einem Extruder, bevorzugt in einem Mehrwellenextruder oder in einem Planetwalzenmischer, erfolgen. Zur Stabilisierung der thermisch vernetzten Polyacrylathotmelts, insbesondere auch von Polymerblends aus thermisch vernetzten Polyacrylathotmelts und anderen Polymeren, kann es sinnvoll sein, das ausgeformte Material mit Elektronenbestrahlung geringer Dosen zu bestrahlen. Optional können zu diesem Zweck dem Polyacrylat Vernetzungspromotoren, wie di-, tri-, oder multifunktionelles Acrylat, Polyester und/oder Urethanacrylat, zugesetzt werden.

Falls Beschleuniger und/oder Additive, wie oben beschrieben, zugegeben werden, kann dies jeweils zeitgleich oder zeitlich versetzt zur Zugabe des Vernetzers geschehen. Die Zugabe kann am gleichen Ort oder an verschiedenen Stellen beispielsweise in einem Compounder geschehen.

Im Falle von lösungsmittelbasierten oder in Wasser dispergierten Polymerformulierungen wird der Vernetzer, insbesondere ein epoxidiertes Pflanzenöl bzw. Triglycerid, dem Polymer vor oder mit der optionalen Beschleunigerzugabe zugesetzt. Die epoxidgruppenhaltigen Vernetzer können den Monomeren bereits vor oder während der Polymerisationsphase zugegeben werden, wenn sie für diese hinreichend stabil sind. Vorteilhaft werden die epoxidgruppenhaltigen Substanzen dem Polymer kurz vor der Formgebung, insbesondere die Beschichtung eines Trägers mit der Polymermasse, zugesetzt.

Gemäß einer weiteren Ausführungsform liegt das Polyacrylat mit mindestens einer Carboxygruppe der Polymermasse bei der Formgebung als Schmelze vor. Es kann auch schon zum Versetzen mit dem Vernetzen sowie dem optionalen Beschleuniger und dem optionalen mindestens einen Additiv teilweise oder ganz aufgeschmolzen sein. Das Polymer bzw. das Polyacrylat wird nach dieser Ausführungsform also als sogenanntes Hotmelt verarbeitet.

Zur Verarbeitung als Hotmelt wird zunächst ein Lösungsmittel bzw. ein Dispergierungsmittel, falls vorhanden, im Vakuum entfernt, wobei dieser Schritt bevorzugt in einem Einschneckenextruder, auch Aufkonzentrationsextruder genannt, mit mehreren Vakuumzonen geschieht. Die Aufkonzentration des Polymers kann in Abwesenheit der Vernetzer- und optionalen Beschleunigersubstanzen geschehen. Auch die optionalen Additive können erst später zugegeben werden. Es ist aber auch möglich, dem Polymer bereits vor der Aufkonzentration eine oder mehrere Verbindungen dieser Verbindungsklassen zuzusetzen, sodass die Aufkonzentration dann in Gegenwart dieser Substanz(en) erfolgt.

Die Polymere können dann in einen Compounder überführt werden. In besonderen Ausführungen des erfindungsgemäßen Verfahrens können die Aufkonzentration und die Compoundierung im selben Reaktor stattfinden.

Insbesondere kann als Compounder ein Extruder eingesetzt werden. Die Polymere liegen im Compounder in der Schmelze vor, entweder indem sie bereits im Schmelzzustand hineingegeben werden oder indem sie im Compounder bis zur Schmelze erhitzt werden. Im Compounder werden die Polymere durch Beheizung in der Schmelze gehalten.

Solange weder der Vernetzer noch Beschleuniger im Polymer vorliegen, wird die mögliche Temperatur in der Schmelze durch die Zersetzungstemperatur des Polymers begrenzt. Die Prozesstemperatur im Compounder liegt üblicherweise zwischen 80 bis 150 °C, insbesondere zwischen 100 und 120 °C.

Falls Beschleuniger zugegeben werden, wird der Vernetzer dem Polymer vor oder mit der Beschleunigerzugabe zugesetzt. Die epoxidgruppenhaltigen Substanzen können den Monomeren bereits vor oder während der Polymerisationsphase zugegeben werden, wenn sie für diese hinreichend stabil sind. Vorteilhaft werden die epoxidgruppenhaltigen Substanzen dem Polymer aber entweder vor der Zugabe in den Compounder oder bei der Zugabe in den Compounder zugesetzt, also zusammen mit dem Polymer in den Compounder gegeben.

Bei einem Hotmeltverfahren können bevorzugt etwaige Additive in die Schmelze während der Extrusion gegeben werden. Die Zugabe ist aber auch zu einem Polymer in Lösung vor der Aufkonzentration möglich. Bei einem auf Lösungsmitteln basierenden Verfahren können etwaige Additive in die Lösung bzw. Dispersion insbesondere kurz vor der Formgebung gegeben werden.

Bei einer sehr vorteilhaften Vorgehensweise wird ein Beschleuniger dem Polymer kurz vor dessen Weiterverarbeitung, insbesondere einer Formgebung, wie beispielsweise einer Beschichtung eines Trägers oder einer anderweitigen Ausformung, zugesetzt. Das Zeitfenster der Zugabe vor der Formgebung richtet sich insbesondere nach der zur Verfügung stehenden Topfzeit, also der Verarbeitungszeit als Lösung, als Dispersion oder in der Schmelze, ohne dass die Eigenschaften des resultierenden Produktes nachteilig verändert werden.

Mit dem erfindungsgemäßen Verfahren können Verarbeitungszeiten von einigen Minuten bis zu einigen zehn Minuten erzielt werden, sodass der optionale Beschleuniger innerhalb dieser Zeitspanne vor der Beschichtung zugesetzt werden sollte. Vorteilhaft wird ein Beschleuniger so spät wie möglich zugesetzt, aber so früh wie nötig, dass noch eine gute Homogenisierung mit der Polymermasse erfolgt. Als sehr vorteilhaft haben sich hier Zeitspannen von 2 bis 10 Minuten, insbesondere von mehr als 5 Minuten, bei einer Prozesstemperatur von 110 bis 120 °C herausgestellt.

Der Vernetzer und optional der Beschleuniger können auch kurz vor der Weiterverarbeitung des Polymers zugesetzt werden, also vorteilhaft in der Phase, wie sie vorstehend für die Beschleuniger dargestellt ist. Hierzu ist es vorteilhaft, das Vernetzer und ggf. Beschleuniger an ein- und derselben Stelle gleichzeitig in den Prozess eingebracht werden. Dies kann auch als Vernetzer-Beschleuniger-Abmischung bzw. Vernetzer-Beschleuniger-System geschehen.

Grundsätzlich ist es auch möglich, die Zugabezeitpunkte bzw. im Falle eines Compoundierungsprozesses die Zugabestellen von Vernetzer und optionalem Beschleuniger in den oben dargestellten Ausführungen zu vertauschen, sodass der Beschleuniger vor dem Vernetzer zugesetzt wird.

Im Compoundierungsprozess kann die Temperatur des Polymers bei der Zugabe der Vernetzer und/oder der optionalen Beschleuniger und/oder der optionalen Additive zwischen 50 und 150 °C, bevorzugt zwischen 70 und 130 °C, besonders bevorzugt zwischen 80 und 120 °C, betragen.

Gemäß einer weiteren Ausführungsform wird bei der Formgebung ein Träger, insbesondere ein Träger für Klebebänder, mit der Polyacrylatmasse, beschichtet. Der Träger wird insbesondere flächig mit der Polymermasse beschichtet. Auf diese Weise kann ein Klebeband, insbesondere ein Haftklebeband, hergestellt werden. Der Träger kann beispielsweise eine Folie, ein Schaum, ein syntaktischer Schaum, ein Gewebe, ein Papier oder ein Vlies sein.

Die Polymermasse kann mit den gängigen, dem Fachmann geläufigen Beschichtungsverfahren aus Lösung, aus Dispersion oder aus der Schmelze zu einer Schicht, insbesondere einer Haftklebemasseschicht, auf einen Träger ausgeformt werden. Es können auch mehrere Schichten auf dem Träger, insbesondere beidseitig, erzeugt werden. Die eine oder mehrere Schicht der Haftklebemasse kann vorteilhaft ein Flächengewicht von 40 bis 3000 g/$m^2$ aufweisen. Für höhere Masseaufträge ist die Beschichtung mittels Hotmelt-Extrusion vorteilhaft.

Nach der Beschichtung kühlt die Polymermasse in der Regel relativ rasch aus und zwar bis auf die Lagerungstemperatur, in der Regel auf Raumtemperatur. Der erfindungsgemäß eingesetzte mindestens zweifach epoxidierte Vernetzer ist, optional in Kombination mit einem Beschleuniger, geeignet, auch ohne die Zufuhr von weiterer thermischer Energie, also ohne Wärmezufuhr, die Vernetzungsreaktion voranschreiten zu lassen.

Weiterhin ist es von Vorteil, sofern Beschleuniger zugesetzt werden, diese Beschleuniger sowie deren Konzentrationen derart zu wählen, dass der elastische Anteil des Polymers bzw. Polyacrylats nach der Formgebung, insbesondere nach Verlassen eines Compoundierprozesses, bei niedrigeren Temperaturen als im Prozess, beispielsweise Raumtemperatur, innerhalb einer Woche, bevorzugt innerhalb von drei Tagen, einen Wert von 25 %, bevorzugt von 35 %, überschreitet, sodass schon ein funktionsfähiges Produkt, insbesondere ein Klebeband oder eine funktionsfähige Trägerschicht auf Basis des Polyacrylats, vorliegt.

Die Vernetzungsreaktion zwischen den funktionellen Gruppen des Polymers und den Epoxidgruppen des Vernetzers läuft in der Regel, ggf. mit mindestens einem Beschleuniger, auch ohne Wärmezufuhr bei Normalbedingungen (Raumtemperatur) vollständig ab.

Prinzipiell kann die Zahl der funktionellen Gruppen des Polymers, also insbesondere die Zahl der Carboxygruppen, derart gewählt werden, dass diese bezüglich der Epoxidgruppen des Vernetzers im Überschuss vorliegen. Sie kann auch so gewählt werden, dass es im Polymer hinreichend viele funktionelle Gruppen, also potentielle Vernetzungs- oder Verknüpfungsstellen, gibt, um den gewünschten Vernetzungsgrad zu erzielen. Der Vernetzungsgrad korreliert mit dem elastischen Anteil, der über den Mikroscherweg (Messmethode H3) bestimmt wird.

Für die Wirkung des Vernetzers, optional in Kombination mit einem oder mehrerer Beschleuniger, ist es besonders vorteilhaft, die Menge an den für die Vernetzungsreaktion verwendeten funktionellen Gruppen im Polyacrylat, auf die Menge an Vernetzer und gegebenenfalls auch auf die Mengen an Beschleuniger und Vernetzer abzustimmen und für das gewünschte Vernetzungsresultat zu optimieren (siehe hierzu auch die Ausführungen zu den entsprechenden Zusammenhängen und zur Steuerungsmöglichkeit des Verfahrens).

Hierzu kann insbesondere das Verhältnis der Anzahl der Epoxidgruppen der Vernetzer zur Anzahl der reaktiven funktionellen Gruppen des Polymers herangezogen werden. Grundsätzlich kann dieses Verhältnis frei gewählt werden, sodass entweder ein Überschuss an funktionellen Gruppen, zahlenmäßige Gleichheit der Gruppen, oder ein Überschuss an Epoxidgruppen vorliegt. Vorteilhaft wird dieses Verhältnis derart gewählt, dass die Epoxidgruppen des Vernetzers im Unterschuss (bis maximal gleicher Stöchiometrie) vorliegen; ganz besonders bevorzugt liegt das Verhältnis der Gesamtzahl der Epoxidgruppen der Vernetzer zur Anzahl der reaktiven funktionellen Gruppen des Polymers im Bereich von

0,1 : 1 bis 1 : 1.

Eine weitere Kennzahl für das Verfahren ist das Verhältnis der Anzahl beschleunigungswirksamer Gruppen der optional eingesetzten Beschleuniger zur Anzahl der Epoxidgruppen der Vernetzer. Beispielsweise werden bei den bevorzugt verwendeten Stickstoffbasen als beschleunigungswirksame Gruppen die Zahl der Stickstoffatome, insbesondere der Aminogruppen, gerechnet. Auch dieses Verhältnis kann grundsätzlich frei gewählt werden, sodass entweder ein Überschuss an beschleunigungswirksamen Gruppen, gleiche Stöchiometrie der Gruppen oder ein Überschuss an Epoxidgruppen vorliegt.

Es ist besonders vorteilhaft, wenn das Verhältnis der Anzahl beschleunigungswirksamer Gruppen im Beschleuniger zur Anzahl der Epoxidgruppen im Vernetzer von 0,2 : 1 bis 4 : 1 beträgt.

Nach der Compoundierung der Masse erfolgt die Weiterverarbeitung, insbesondere die Formgebung, des Polymers. Dies kann insbesondere die Beschichtung auf einen permanenten oder auf einen temporären Träger sein. Ein permanenter Träger verbleibt bei der Anwendung mit der aufgebrachten Klebemassenschicht verbunden, während ein temporärer Träger in dem weiteren Verarbeitungsprozess, zum Beispiel der Konfektionierung des Klebebandes, oder bei der Anwendung von der Klebemassenschicht wieder abgenommen wird.

Die Beschichtung mit der insbesondere compoundierten Polyacrylatmasse, die vorzugsweise als Selbstklebemasse ausgebildet ist, kann mit den dem Fachmann bekannten Verfahren erfolgen. Sie kann beispielsweise über Hotmelt-Beschichtungsdüsen oder bevorzugt mittels Walzenauftragswerken, auch Beschichtungskalander genannt, erfolgen. Die Beschichtungskalander können vorteilhaft aus zwei, drei, vier oder mehr Walzen bestehen.

Bevorzugt ist hierbei, dass zumindest eine der Walzen mit einer anti-adhäsiven Walzenoberfläche versehen ist. Bevorzugt sind es alle Walzen, die mit dem Polyacrylat, in Berührung kommen. Es können in günstiger Vorgehensweise alle Walzen des Kalanders anti-adhäsiv ausgerüstet sein. Als anti-adhäsive Walzenoberfläche wird besonders bevorzugt ein Stahl-Keramik-Silikon-Verbundwerkstoff eingesetzt. Derartige Walzenoberflächen sind gegen thermische und mechanische Belastungen resistent.

Es hat sich überraschend als besonders vorteilhaft gezeigt, wenn man Walzenoberflächen eingesetzt werden, die eine Oberflächenstruktur aufweisen, insbesondere in der Art, dass die Fläche keinen vollständigen Kontakt zur zu verarbeitenden Polymerschicht herstellt, sondern dass die Kontaktfläche verglichen mit einer glatten Walze geringer ist. Besonders günstig sind strukturierte Walzen wie Metall-Rasterwalzen, beispielsweise Stahlrasterwalzen.

Die Beschichtung kann vorteilhaft entsprechend der Beschichtungsverfahren, wie sie in der WO 2006/027387 A1 von Seite 12, Zeile 5 bis Seite 20, Zeile 13 dargestellt sind, und zwar insbesondere unter den Abschnitten "Variante A" (ab Seite 12), "Variante B" (ab Seite13), "Variante C" (ab Seite 15), "Verfahren D" (ab Seite 17), "Variante E" (ab Seite 19) sowie die Figuren 1 bis 6. Die genannten Offenbarungsstellen der WO 2006/027387 A1 werden daher hiermit explizit in den Offenbarungsgehalt der vorliegenden Schrift eingeschlossen.

Besonders gute Ergebnisse werden bei den Zwei- und Dreiwalzenkalanderwerken durch die Verwendung von Kalanderwalzen erzielt, die mit anti-adhäsiven Oberflächen oder mit oberflächenmodifizierten Walzen, hier besonders vorteilhaft zu erwähnen sind Metall-Rasterwalzen, ausgerüstet sind (vgl. insbesondere Varianten B - Fig. 3, Variante C - Fig. 4 und Variante D - Fig. 4 der WO 2006/027387 A1). Diese Metall-Rasterwalzen, vorzugsweise Stahl-Rasterwalzen, weisen eine regelmäßige, geometrisch unterbrochene Oberflächenstruktur auf. Dies gilt insbesondere vorteilhaft für die Überführungswalze, die im Rahmen der Anmeldung auch mit ÜW abgekürzt wird. Diese Oberflächen tragen in besonders vorteilhafter Weise zu einem Gelingen des Beschichtungsverfahrens bei, da anti-adhäsive und strukturierte Oberflächen die Übertragung der Polymermasse bzw. Polyacrylatmasse selbst auf anti-adhäsiv ausgerüstete Trägeroberflächen ermöglichen. Verschiedene Arten anti-adhäsiver Oberflächenbeschichtungen können für die Kalanderwalzen verwendet werden. Als besonders geeignet haben sich auch hier zum Beispiel die bereits vorstehend genannten Metall-Keramik-Silikon-Verbundwerkstoffe Pallas SK-B-012/5 der Fa. Pallas Oberflächentechnik GmbH, Deutschland sowie AST 9984-B der Fa. Advanced Surface Technologies, Deutschland, erwiesen.

Insbesondere die Überführungswalzen können dabei als Stahl-Rasterwalzen ausgebildet sein. Besonders bevorzugt werden als Überführungswalze beispielsweise Stahl-Rasterwalzen mit der Bezeichnung 140 L/cm und einer Stegbreite von 10 $\mu$m, z.B. solche von der Firma Saueressig, Deutschland, eingesetzt.

Bei der Beschichtung können insbesondere bei Einsatz der Mehrwalzenkalander Beschichtungsgeschwindigkeiten bis 300 m/min verwirklicht werden.

Direkt nach der Beschichtung, bevorzugt mittels Walzenauftrag oder mittels Extrusionsdüse, ist das Polymer der Polymermasse in der Regel nur leicht anvernetzt, aber noch nicht ausreichend vernetzt. Die Vernetzungsreaktion verläuft dann in der Regel auf einem Träger.

Durch die Vernetzung erhöhen sich die Kohäsion des Polymers und damit auch die Scherfestigkeit. Die Verknüpfungen sind sehr stabil. Dies ermöglicht sehr alterungsstabile und wärmebeständige Produkte, wie Klebebänder, viskoelastische Trägermaterialien, zum Beispiel Träger für Klebebänder, oder Formkörper.

Die physikalischen Eigenschaften des Endproduktes, insbesondere dessen Viskosität, Klebkraft und Anfassklebrigkeit, können durch den Grad der Vernetzung beeinflusst werden, sodass sich durch geeignete Wahl der Reaktionsbedingungen das Endprodukt optimieren lässt. Diverse Faktoren können weiterhin das Prozessfenster des Verfahrens

bestimmen. Die wichtigsten Einflussgrößen sind die Mengen, also Konzentrationen und Verhältnisse zueinander, und die chemische Beschaffenheit der optionalen Beschleuniger, der Vernetzer, die Prozess- und Beschichtungstemperatur, die Verweilzeit im Compounder, insbesondere Extruder, und im Beschichtungsaggregat, der Anteil an funktionellen Gruppen, insbesondere Carboxygruppen, im Polymer sowie das gewichtsmittlere Molekulargewicht des Polymers.

In den Figuren 1 bis 3 sind einige Compoundierung- bzw. Beschichtungsvarianten exemplarisch illustriert. Es zeigen schematisch

Fig.1 einen Compoundierungs- und Beschichtungsprozess mit kontinuierlichen Ablauf,

Fig. 2 die Beschichtung mit einem Zweiwalzenauftragswerk und

Fig. 3 ein Zweiwalzverfahren für Mehrschichtprodukte.

In Figur 1 ist beispielhaft ein Compoundierungs- und Beschichtungsprozess anhand eines kontinuierlichen Ablaufs dargestellt. Die Polyacrylate, werden an der ersten Eingabestelle 1.1 in den Compounder 1.3, hier beispielsweise ein Extruder, gegeben. Entweder erfolgt die Zugabe bereits in der Schmelze, oder die Polymere werden im Compounder bis zur Schmelze erhitzt. Vorteilhaft werden an der ersten Eingabestelle mit dem Polymer die epoxidhaltigen Verbindungen in den Compounder gegeben.

Kurz vor der Beschichtung werden an einer zweiten Eingabestelle 1.2 die optionalen Beschleuniger zugesetzt. Dies hat den Effekt, dass die Beschleuniger den mit dem Vernetzer vermischten Polymeren erst kurz vor der Beschichtung zugesetzt werden und die Reaktionszeit in der Schmelze gering ist. RW bezeichnet eine Rakelwalze und BW eine Beschichtungswalze.

Die Reaktionsführung kann auch diskontinuierlich erfolgen. In entsprechenden Compoundern, beispielsweise Reaktorkesseln, kann die Zugabe der Polymere, der Vernetzer und der optionalen Beschleuniger zeitversetzt und nicht, wie in der Figur 1 dargestellt, ortsversetzt stattfinden.

Ein in Figur 2 beispielhaft gezeigter Zweiwalzenkalander eignet sich insbesondere zur Herstellung von Klebebändern mit Schichtdicken zwischen 5 $\mu$m und 5000 $\mu$m bei niedrigen und moderaten Beschichtungsgeschwindigkeiten von 1 m/min bis 50 m/min.

Die zwei Walzen und sind hier derart angeordnet, dass sie einen Spalt bilden, in welchen eine z.B. als Selbstklebemasse ausgeführte Polymermasse 3 beispielsweise mittels einer Verteilerdüse 1 eingebracht wird. Die erste Walze BW, eine Beschichtungswalze, führt einen Träger 2, auf den die Polymermasse 3 beschichtet werden soll. Die zweite Walze RW, eine Rakelwalze, führt einen beispielsweise antiadhäsiv ausgerüsteten Hilfsträger 5 und presst mittels des Hilfsträgers auf die Polymermasse, sodass diese auf den Träger 2 als Schicht 4 abgelegt wird. Der antiadhäsiv ausgerüstete Hilfsträger 5 wird von der Selbstklebemassenschicht 4 wieder abgenommen, und das Klebeband 6 aus der Klebemassenschicht 4 auf dem Träger 2 wird aus der Beschichtungsanlage herausgeführt.

Bei Schichtdicken bis ca. 500 $\mu$m kann auf den antiadhäsiv ausgerüsteten Hilfsträger 5 verzichtet werden, sodass die Klebmasse 3 direkten Kontakt zur Rakelwalze RW hat. Als Materialien für den Träger 2 können nahezu alle in der Klebebandherstellung bekannten Trägermaterialien verwendet werden, so zum Beispiel thermoplastische Folien PE, PP, PET, Papiere, Gewebe, auch Trennfolien und andere antiadhäsive ausgerüstete Trägertypen. Die Oberflächentemperaturen der Walzen werden zwischen 25 °C und 200 °C, bevorzugt zwischen 60 °C und 150 °C und besonders bevorzugt zwischen 80 °C und 120 °C, eingestellt. Als Oberflächen für die beiden verwendeten Kalanderwalzen eignen sich die dem Fachmann geläufigen Materialien wie Stahl, verchromter Stahl, rostfreier Stahl, Kunststoffe, Silikone, Keramiken sowie denkbare Kombinationen aus den genannten Materialien.

Wenn Schichtdicken bis ca. 500 $\mu$m beschichtet werden sollen und auf den Hilfsträger 5 verzichtet wird, ist eine antiadhäsiv ausgerüstete Walzenoberfläche der Rakelwalze RW vorteilhaft. Solch eine Walzenoberfläche kann beispielsweise aus dem Material mit der Bezeichnung PALLAS SK-B-012/5 der Fa. PALLAS OBERFLÄCHENTECHNIK GMBH, Deutschland oder aus dem Material mit der Bezeichnung AST 9984-B der Fa. ADVANCED SURFACE TECHNOLOGIES, Deutschland, bestehen. Bei diesen Oberflächen handelt es sich um Metall-Keramik-Silikon-Verbundwerkstoffe, die sich durch gute antiadhäsive Eigenschaften bei gleichzeitig hoher Standfestigkeit unter den gewählten Prozessbedingungen auszeichnen.

Die Figur 3 zeigt beispielhaft eine Verfahrensführung, die insbesondere vorteilhaft zur Herstellung von dreischichtigen Klebebändern eingesetzt werden kann, bei welcher eine thermisch vernetzende Polyacrylatmasse den Träger des Klebebandes bildet. Der Aufbau des Dreischichtensystems Klebemasse-Polyacrylatträger-Klebemasse erfolgt hier über eine Zweiwalzenanlage mittels einer Verteilerdüse 1 oder einer anderen geeigneten Einheit, über die die mit dem Vernetzer und ggf. mit Beschleuniger und/oder Additiven, wie zum Beispiel Füllstoffen, fertig compoundierte viskoelastische Masse 3, die das spätere Trägermaterial bildet, dem Walzenspalt zugeführt und dort zwischen die beiden Klebemassenschichten 6a und 6b, die zuvor einer Vorbehandlung, insbesondere einer Corona-Behandlung 8, unterzogen wurden, eingebracht. Die Klebemassen 6a und/oder 6b können herkömmliche oder erfindungsgemäß hergestellte

Klebemassen sein. Die insbesondere auf anti-adhäsiv ausgerüsteten Hilfsträgern 5a und 5b beschichteten Klebemassen werden dabei über die Walzen W1 und W2 in die Apparatur eingebracht, und zwar derart, dass die Klebemassenseiten einander zugewandt sind.

Die Ausformung der viskoelastischen Masse zu einem viskoelastischen Film erfolgt zwischen den Kalanderwalzen W1 und W2 im Walzenspalt, dabei kommt es gleichzeitig zur Beschichtung mit den beiden zugeführten Selbstklebemassen 6a und 6b. Die Vorbehandlung der Klebemassen, insbesondere innerhalb einer Corona-Station 8, dient der besseren Verankerung der Klebemassen auf der ausgeformten, viskoelastischen Trägerschicht. Durch diese Behandlung entstehen aktive OH-Gruppen an der Oberfläche der Selbstklebemassen, die nach der Herstellung des Dreischichtverbundes zu einer verbesserten chemischen Anbindung an die viskoelastische Trägerschicht führen. Durch die Breite des Walzenspalts und den Druck der Walzen wird dabei die Schichtdicke des Trägers bestimmt. Das vorstehend dargestellte Verfahren eignet sich insbesondere zur Herstellung von viskoelastischen Dreischichtaufbauten mit Schichtdicken zwischen 100 $\mu$m und 10.000 $\mu$m, bevorzugt zwischen 300 $\mu$m und 5.000 $\mu$m, und mit Geschwindigkeiten zwischen 0,5 m/min und 100 m/min.

Nach Verlassen des Walzenspaltes wird ggf. ein anti-adhäsiver Träger 5a ausgedeckt und das fertige Dreischichtprodukt 7 mit dem verbleibenden zweiten anti-adhäsiven Träger 5b aufgewickelt.

Die Oberflächentemperaturen der Walzen werden abhängig von den verwendeten viskoelastischen Massen und anti-adhäsiven Trägermaterialien bevorzugt zwischen 25 °C und 200 °C, mehr bevorzugt zwischen 60 °C und 150 °C und besonders bevorzugt zwischen 80 °C und 120 °C, eingestellt. Als Oberflächen für die beiden verwendeten Kalanderwalzen eignen sich alle dem Fachmann geläufigen Materialien, wie z.B. Stahl, verchromter Stahl, rostfreier Stahl, Kunststoffe, Silikone, Keramiken sowie Kombinationen aus den genannten Materialien.

Im Folgenden werden beispielhaft einige Zusammenhänge bei der Herstellung der erfindungsgemäß vernetzten Polyacrylate, beispielsweise eine Selbstklebemasse, beschrieben, die das Verfahren näher charakterisieren, aber nicht einschränkend für den erfindungsgemäßen Gedanken gemeint sind.

Das erfindungsgemäße Verfahren bietet in hervorragender, nicht zu erwartender Weise den Vorteil, dass ein stabiler Vernetzungsprozess für Polyacrylate, und mit guter Steuerungsmöglichkeit bezüglich des Vernetzungsbildes angegeben wird. Die zugesetzte Vernetzermenge beeinflusst dabei weitgehend oder vollständig den Vernetzungsgrad des Produktes. Durch die optionale Zugabe von einem oder mehrerer Beschleuniger kann die Reaktivität zusätzlich gesteuert, insbesondere erhöht, werden.

Überraschenderweise konnte festgestellt werden, dass sich durch die Menge der zugesetzten Vernetzer der Vernetzungsgrad vorwählen ließ und zwar weitgehend unabhängig von den sonst gewählten Verfahrensparametern wie Temperatur und Menge an optional zugesetztem Beschleuniger.

Wird ein Beschleuniger eingesetzt, so hat die zugesetzte Menge an Beschleuniger einen Einfluss auf die Vernetzungsgeschwindigkeit, also auch den Zeitpunkt des Erreichens eines stabilen Vernetzungsgrades, ohne diesen aber absolut zu beeinflussen. Die Reaktivität der Vernetzungsreaktion ist mit Vorteil so, dass die Vernetzung auch bei der Lagerung des fertigen Produktes bei den dort üblichen Bedingungen (Raumtemperatur) innerhalb weniger Wochen zu dem gewünschten Vernetzungsgrad führt, insbesondere ohne dass noch thermische Energie (aktiv) zugeführt werden muss oder dass das Produkt weiter behandelt werden müsste.

Zusätzlich zu den vorgenannten Parametern kann die Reaktivität der Vernetzungsreaktion auch durch Variation der Temperatur beeinflusst werden, wenn dies gewünscht ist, also insbesondere in Fällen, wo der Vorteil der "Eigenvernetzung" während der Lagerung bei üblichen Bedingungen keine Rolle spielt. Bei gleich bleibender Vernetzerkonzentration führt eine Erhöhung der Prozesstemperatur zu einer verringerten Viskosität, dies verbessert die Beschichtbarkeit mit der Masse, reduziert jedoch die Verarbeitungszeit.

Eine Erhöhung der Verarbeitungszeit erhält man im Allgemeinen durch Verringerung der Beschleunigerkonzentration, Verringerung der Vernetzerkonzentration, Verringerung des Molekulargewichts, Verringerung der Konzentration an funktionellen Gruppen im Polymer, Verringerung des Säureanteils im Polymer, Verwendung von weniger reaktiven Beschleunigern, Verzicht von Beschleunigern und Verringerung der Prozesstemperatur.

Eine Kohäsionsverbesserung der Masse kann auf unterschiedlichen Wegen erhalten werden. Entweder wird die Beschleunigerkonzentration erhöht, was die Verarbeitungszeit reduziert. Es kann bei gleich bleibender Beschleunigerkonzentration auch das Molekulargewicht des Polyacrylats erhöht werden, was möglicherweise effizienter ist. Im erfindungsgemäßen Sinne ist es jedenfalls vorteilhaft, die Vernetzerkonzentration zu erhöhen. Je nach gewünschtem Anforderungsprofil der Masse bzw. des Produktes können die oben genannten Parameter in geeigneter Weise angepasst werden.

Durch das erfindungsgemäße Verfahren können vorteilhafte vernetzte Polyacrylate hergestellt werden. Als weiterer Aspekt der Anmeldung wird daher ein vernetztes Polyacrylat, angegeben, das durch das Verfahren nach zumindest einer erfindungsgemäßen Ausführungsform erhältlich ist. In einem solchen vernetzten Polyacrylat sind also die Polymerstränge über Gruppierungen, die auf den mindestens zweifach epoxidierten Vernetzern zurückgeführt werden können, miteinander verbunden. Ein solches vernetztes Polymer kann beispielsweise als Formkörper vorliegen. Es kann beispielsweise auch Teil eines Klebebandes, z.B. ein Träger und/oder mindestens eine Klebeschicht, sein.

Hinsichtlich der Monomerenzusammensetzung, insbesondere mit den Monomeren der Komponenten (a), (b) und optional (c), des gewichtsmittleren Molekulargewichts, des K-Werts und der Glasübergangstemperatur des Polymers wird ausdrücklich auf die obigen Ausführungen verwiesen. Das vernetzte Polymer kann auch ein oder mehrere der oben beschriebenen Additive enthalten.

Als weiterer Aspekt der Anmeldung wird ein Klebeband angegeben. Das Klebeband umfasst ein vernetztes Polyacrylat, nach zumindest einer erfindungsgemäßen Ausführungsform. Das vernetzte Polymer ist insbesondere durch ein Verfahren nach zumindest einer erfindungsgemäßen Ausführungsform erhältlich. Es kann in dem Klebeband zum Beispiel als eine oder mehrere Klebeschichten oder als Träger enthalten sein. Träger bzw. Klebeschichten können das vernetztes Polymer umfassen oder daraus bestehen. Es können auch sowohl Träger als auch eine oder mehrere Klebeschichten das vernetzte Polymer umfassen oder daraus bestehen. Der Träger kann beispielsweise auch eine Folie, ein Schaum, ein syntaktischer Schaum, ein Gewebe, ein Papier oder ein Vlies sein. Das vernetzte Polymer kann ein oder mehrere der oben beschriebenen Additive enthalten.

Das Klebeband kann beispielsweise als technisches Klebeband, insbesondere für den Einsatz im Bauwesen, z.B. als Isolierband, Korrosionsschutzband, Aluminiumklebeband, gewebeverstärktes Folienklebeband (Duct-Tape), Bauspezialklebeband, z.B. Dampfsperre, Montageklebeband, Kabelwickelband, selbstklebende Folie und/oder Papieretikett ausgestaltet sein und hierfür verwendet werden.

Hinsichtlich der Monomerenzusammensetzung, insbesondere mit den Monomeren der Komponenten (a), (b) und optional (c), des gewichtsmittleren Molekulargewichts, des K-Werts und der Glasübergangstemperatur des Polymers wird ausdrücklich auf die obigen Ausführungen verwiesen. Weist das Klebeband eine Haftklebemasse basierend auf einem vernetzten Polyacrylat auf, so können bevorzugt die Monomere der Komponente (a) mit einem Anteil von 45 bis 99 Gew-%, die Monomere der Komponente (b) mit einem Anteil von 1 bis 15 Gew-% und die Monomere der Komponente (c) mit einem Anteil von 0 bis 40 Gew-% gewählt werden. Das vernetzte Polymer kann auch ein oder mehrere der oben beschriebenen Additive enthalten.

Als weiterer Aspekt der Anmeldung wird ein Träger bzw. eine Trägerschicht für Klebebänder angegeben. Der Träger umfasst ein vernetztes Polyacrylat, nach zumindest einer erfindungsgemäßen Ausführungsform oder er besteht daraus. Das vernetzte Polymer ist insbesondere durch ein Verfahren nach zumindest einer erfindungsgemäßen Ausführungsform herstellbar. Der Träger bzw. das vernetzte Polymer kann ein oder mehrere der oben beschriebenen Additive enthalten. Es können bevorzugt die Monomere der Komponente (a) mit einem Anteil von 45 bis 99 Gew-%, die Monomere der Komponente (b) mit einem Anteil von 1 bis 15 Gew-% und die Monomere der Komponente (c) mit einem Anteil von 0 bis 40 Gew-% gewählt werden.

Als weiterer Aspekt der Anmeldung wird eine Heißschmelzklebemasse oder Heißsiegelmasse angegeben. Diese umfasst ein Polyacrylat mit mindestens einer Carboxygruppe und einen mindestens zweifach epoxidierten Vernetzer zur Vernetzung des Polymers, wobei der mindestens zweifach epoxidierte Vernetzer aus einer Gruppe ausgewählt ist, die Fettsäuren, Fettsäureester, Fettalkohole, Ester von Fettalkoholen und Kombinationen hiervon umfasst. In der Heißschmelzklebemasse ist das Polymer noch nicht oder nur kaum vernetzt. Es ist insbesondere fest. Es ist mit dem Vernetzer versetzt und wird erst zur Anwendung aufgeschmolzen, sodass es mit dem Vernetzer reagieren kann. Die Heißschmelzklebemasse oder Heißsiegelmasse kann ein oder mehrere der oben beschriebenen Additive enthalten. Es können bevorzugt die Monomere der Komponente (a) mit einem Anteil von 50 bis 99 Gew-%, die Monomere der Komponente (b) mit einem Anteil von 1 bis 20 Gew-% und die Monomere der Komponente (c) mit einem Anteil von 0 bis 30 Gew-% gewählt werden. Die Heißschmelzklebemasse oder Heißsiegelmasse kann Teil eines Klebebandes, z.B. eines Transferklebebandes, sein.

Die erfindungsgemäß hergestellten vernetzten Polyacrylate, können für breitgefächerte Anwendungen eingesetzt bzw. das Verfahren zu deren Herstellung verwendet werden. Nachstehend sind einige besonders vorteilhafte Beispiele und Ausgestaltungen beschrieben.

Ein mit dem erfindungsgemäßen Verfahren hergestelltes vernetztes Polyacrylat kann insbesondere als Haftklebemasse verwendet werden, bevorzugt als Haftklebemasse für ein Klebeband, wobei die Acrylathaftklebemasse als ein- oder doppelseitiger Film auf einer Trägerfolie vorliegt. Insbesondere gut geeignet sind diese vernetzten Polyacrylate, wenn ein hoher Masseauftrag in einer Schicht gefordert ist, da mit den oben beschriebenen Beschichtungsverfahren ein nahezu beliebig hoher Masseauftrag, bevorzugt mehr als 50 $g/m^2$, besonders bevorzugt mehr als 100 $g/m^2$, möglich ist, und zwar insbesondere bei gleichzeitig besonders homogener Vernetzung durch die Schicht hindurch. Günstige Anwendungen, ohne Anspruch auf Vollständigkeit, sind beispielsweise technische Klebebänder, insbesondere für den Einsatz im Bauwesen, z.B. Isolierbänder, Korrosionsschutzbänder, Aluminiumklebebänder, gewebeverstärkte Folienklebebänder (sogenannte Duct-Tapes), Bauspezialklebebänder, z.B. Dampfsperren, Montageklebebänder, Kabelwickelbänder, selbstklebende Folien und/oder Papieretiketten.

Ein erfindungsgemäß hergestelltes vernetztes Polyacrylat kann auch als Haftklebemasse für ein trägerloses Klebeband, ein sogenanntes Transferklebeband, ausgebildet sein. Auch hier ist der nahezu beliebig hoch einstellbare Masseauftrag bei gleichzeitig besonders homogener Vernetzung durch die Schicht hindurch besonders vorteilhaft. Bevorzugte Flächengewichte sind mehr als 10 $g/m^2$ bis 5000 $g/m^2$, besonders bevorzugt 100 $g/m^2$ bis 3000 $g/m^2$.

Ein Polyacrylat kann mit dem Vernetzer beispielsweise als Heißsiegelklebemasse in Transferklebebändern oder in ein- oder doppelseitigen Klebebändern vorliegen. Auch hier kann für trägerhaltige Haftklebebänder der Träger ein erfindungsgemäß erhaltenes viskoelastisches Polyacrylat sein.

Eine vorteilhafte Ausführungsform der entsprechend erhaltenen Klebebänder kann als stripfähiges Klebeband verwendet werden, insbesondere derart, dass es durch Zug im Wesentlichen in der Verklebungsebene rückstandsfrei wieder abgelöst werden kann.

Das erfindungsgemäße Verfahren eignet sich auch besonders gut zur Herstellung von dreidimensionalen haftklebrigen oder auch nicht haftklebrigen Formkörpern. Ein besonderer Vorteil dieses Verfahrens ist, dass eine Schichtdickenbegrenzung eines zu vernetzenden, auszuformenden Polyacrylats im Gegensatz zu UV- und ESH härtenden Verfahren nicht oder nur kaum vorhanden ist. Entsprechend der Wahl des Beschichtungs- oder Ausformungsaggregates lassen sich somit beliebig geformte Gebilde herstellen, die dann beispielsweise unter milden Bedingungen zu gewünschter Festigkeit nachvernetzen können.

Besonders geeignet ist dieses Verfahren auch zur Herstellung besonders dicker Schichten, insbesondere von Haftklebeschichten oder viskoelastischen Acrylatschichten mit einer Schichtdicke oberhalb von 80 $\mu$m. Hierbei kann die Polyacrylatmasse, in der Schmelze als Schicht ausgeformt werden (Hotmelt). Derartige Schichten sind mit einer Lösemitteltechnik schlecht herstellbar (Blasenbildung, sehr langsame Beschichtungsgeschwindigkeit, Kaschieren dünner Schichten übereinander ist aufwendig und birgt Schwachstellen).

Dicke Haftklebeschichten können beispielsweise ungefüllt als Reinacrylat oder harzabgemischt oder mit organischen oder anorganischen Füllstoffen gefüllt vorliegen. Auch nach bekannten Verfahren offenzellig oder geschlossenzellig geschäumte Schichten sowie syntaktische Schäume sind möglich. Als Methode zur Schäumung ist die Schäumung über komprimierte Gase wie Stickstoff oder $CO_2$ möglich, oder die Schäumung über Blähmittel wie Hydrazine oder expandierbare Mikroballons. Im Falle der Verwendung von expandierenden Mikroballons wird die Masse bzw. die ausgeformte Schicht vorteilhaft in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien zu glätten. Zur Herstellung schaumanaloger Schichten können einem haftklebrigen thermisch vernetzten Acrylatschmelzhaftkleber auch Glashohlkugeln oder bereits expandierte polymere Mikroballons zugesetzt werden.

Insbesondere können mit diesem Verfahren auch dicke Schichten hergestellt werden, die als Trägerschicht für beidseitig mit Haftklebemasse beschichtete Klebebänder verwendet werden können, insbesondere bevorzugt sind gefüllte und geschäumte Schichten, die als Trägerschichten für schaumartige Klebebänder genutzt werden können. Auch bei diesen Schichten ist es sinnvoll, dem Polyacrylat vor dem Zusatz eines Vernetzer-Beschleuniger-Systems oder des Vernetzers oder des Beschleunigers Glasvollkugeln, Glashohlkugeln oder expandierende Mikroballons zuzusetzen. Im Falle der Verwendung von expandierenden Mikroballons wird die Masse bzw. die ausgeformte Schicht in geeigneter Weise mittels Wärmeeintrag aktiviert. Die Schäumung kann im Extruder oder nach der Beschichtung erfolgen. Es kann zweckmäßig sein, die geschäumte Schicht durch geeignete Walzen oder Trennfolien oder durch das Zukaschieren einer auf ein Trennmaterial beschichteten Haftklebemasse zu glätten. Zu einer derartigen schaumartigen, viskoelastischen Schicht kann mindestens einseitig eine Haftklebeschicht kaschiert werden. Bevorzugt wird beidseitig eine Corona-vorbehandelte Polyacrylatschicht zukaschiert. Es können alternativ anders vorbehandelte Klebeschichten, also Haftklebeschichten und/oder hitzeaktivierbare Schichten auf der Basis anderer Polymere als auf Acrylatbasis zu der viskolelastischen Schicht kaschiert werden. Geeignete Basispolymere sind Naturkautschuk, Synthesekautschuke, Acrylatblockcopolymere, Styrolblockcopolymere, EVA, bestimmte Polyolefine, spezielle Polyurethane, Polyvinylether, und Silikone. Bevorzugt sind jedoch solche Massen, die keine nennenswerten Anteile an migrierfähigen Bestandteilen haben, die mit dem Polyacrylat so gut verträglich sind, dass sie in signifikanter Menge in die Acrylatschicht diffundieren und dort die Eigenschaften verändern.

Statt beidseitig eine Haftklebeschicht zu kaschieren, kann auch mindestens einseitig eine Schmelzklebeschicht oder thermisch aktivierbare Klebschicht verwendet werden. Derartige asymmetrische Klebbänder erlauben das Verkleben kritischer Substrate mit hoher Verklebungsfestigkeit. Ein derartiges Klebeband kann beispielsweise zur Befestigung von EPDM-Gummiprofilen an Fahrzeugen verwendet werden.

Ein besonderer Vorteil von thermisch vernetzten Polyacrylate besteht darin, dass diese Schichten, ob als viskoelastischer Träger, als Haftklebemasse oder als Heißsiegelmasse genutzt, bei gleicher Oberflächengüte kein Vernetzungsprofil durch die Schicht bzw. durch die aus den Polyacrylaten hergestellten Formkörper insbesondere im Gegensatz zu UV- und ESH-vernetzten Schichten zeigen. Dadurch lässt sich die Balance zwischen adhäsiven und kohäsiven Eigenschaften durch die Vernetzung ideal für die gesamte Schicht steuern und einstellen. Bei strahlenchemisch vernetzten Schichten hingegen ist in aller Regel eine Seite oder eine Teilschicht über- oder untervernetzt.

Als weiterer Aspekt der Anmeldung wird eine Verwendung angegeben. Nach zumindest einer Ausführungsform der Verwendung wird eine mindestens zweifach epoxidierte Verbindung, die aus einer Gruppe ausgewählt ist, die Fettsäuren, Fettsäureester, Fettalkohole, Ester von Fettalkoholen und Kombinationen hiervon umfasst,

zum Vernetzen von Polyacrylaten, die mindestens eine Carboxygruppe umfassen, und

zur Herstellung einer Haftklebemasse, eines Klebebandes, eines Trägers für Klebebänder oder einer Heißschmelzklebemasse, die auf einem Polyacrylat mit mindestens eine Carboxygruppe basieren, verwendet.

Die mindestens zweifach epoxidierte Verbindung wird auch kurz als Verbindung bezeichnet. Die Verbindung kann insbesondere einem Vernetzer nach einer der oben beschriebenen Ausführungsformen entsprechen. Sie kann insbesondere in dem erfindungsgemäßen Verfahren oder einer erfindungsgemäßen Heißschmelzklebemasse verwendet werden.

Eine Fettsäure und/oder ein Fettalkohol, auf dem die mindestens zweifach epoxidierte Verbindung basiert, kann eine lineare oder eine verzweigte Kohlenstoffkette mit mindestens 10 und höchstens 24 C-Atomen aufweisen.

Die mindestens zweifach epoxidierte Verbindung kann bevorzugt aus einer Gruppe ausgewählt sein, die Ester einer Fettsäure mit einem Fettalkohol, Fettsäureglyceride und Kombinationen hiervon umfasst.

Die mindestens zweifach epoxidierte Verbindung kann mindestens ein Fettsäureglycerid der allgemeinen Formel (I) umfassen:

$$\begin{array}{l} CH_2OR^1 \\ | \\ CHOR^2 \\ | \\ CH_2OR^3 \end{array} \qquad (I)$$

wobei

die Substituenten $R^1$, $R^2$ und $R^3$ jeweils unabhängig voneinander aus H, Acylrest und Acylrest einer Fettsäure ausgewählt sind, und
mindestens einer, insbesondere mindestens zwei, der Substituenten $R^1$, $R^2$ und $R^3$ ein Acylrest einer Fettsäure ist.

Die Verbindung kann ein mindestens dreifach epoxidiertes Fettsäureglycerid der Formel (I) umfassen, wobei und zwei oder drei der Substituenten $R^1$, $R^2$ und $R^3$ jeweils unabhängig voneinander ausgewählte Acylreste einer Fettsäure sind.

**Experimenteller Teil**

Die folgenden beispielhaften Experimente sollen die Erfindung näher erläutern, ohne dass durch die Wahl der angegebenen Beispiele die Erfindung eingeschränkt werden soll.

Messmethoden (allgemein):

K-Wert (nach FIKENTSCHER) (Messmethode A1):

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt. Die Methode ist in Polymer 1967, 8, 381 ff. beschrieben, dessen Offenbarungsgehalt insofern hiermit aufgenommen wird.

Gelpermeationschromatographie GPC (Messmethode A2):

Die Angaben des gewichtsmittleren Molekulargewichtes $M_W$ und der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/L). Als Eluent wird Tetrahydrofuran mit 0,1 Vol-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung).

Feststoffgehalt (Messmethode A3):

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

Statische Glasübergangstemperatur $T_G$ (Messmethode A4):

Die Bestimmung der statischen Glasübergangstemperatur erfolgt über Dynamische Differenzkalorimetrie nach DIN 53765. Die Angaben zur Glasübergangstemperatur $T_G$ beziehen sich auf den Glasumwandlungstemperatur-Wert $T_G$ nach DIN 53765:1994-03, sofern im Einzelfall nichts anderes angegeben ist.

Gesamthalogengehalt (Messmethode A5):

Die Bestimmung des Gesamthalogengehaltes erfolgt über Verbrennungsanalyse und anschließender mikrocoulometrischer Detektion nach DIN EN 14077.

Messmethoden (insbesondere Haftklebemassen):

180° Klebkrafttest (Messmethode H1):

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.

Die Messergebnisse sind in N/cm angegeben und sind gemittelt aus drei Messungen. Analog wurde die Klebkraft auf Polyethylen (PE) bestimmt.

Scherstandzeit (Messmethode H2):

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, aufgebracht. Die Verklebungsfläche betrug 20 mm x 13 mm (Länge x Breite), wobei das Klebeband die Prüfplatte am Rand überragt (beispielsweise um 10 mm entsprechend oben angegebener Länge von 30 mm). Anschließend wurde das Klebeband viermal mit einem Anpressdruck entsprechend einem Gewicht von 2 kg auf den Stahlträger gedrückt. Diese Probe wurde senkrecht aufgehängt, sodass das überstehende Ende des Klebebandes nach unten zeigt.

Bei Raumtemperatur wurde ein Gewicht von 1 kg an dem überstehenden Ende des Klebebandes befestigt. Die Messung wird bei Normalklima (23 °C, 55 % Luftfeuchtigkeit) und bei 70 °C in einem Wärmeschrank durchgeführt.

Die gemessenen Scherstandzeiten (Zeiten bis zum vollständigen Ablösen des Klebebandes vom Untergrund; Abbruch der Messung bei 10.000 min) sind in Minuten angegeben und entsprechen dem Mittelwert aus drei Messungen.

Mikroschertest (Messmethode H3):

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, sodass die Stahlplatte das Klebeband rechts und links überragt und dass das Klebeband die Prüfplatte am oberen Rand um 2 mm überragt. Die Verklebungsfläche der Probe beträgt Höhe x Breite = 13mm x 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40°C, die Prüfdauer 30 Minuten (15 Minuten Belastung und 15 Minuten Entlastung). Die Scherstrecke nach der vorgegebenen Testdauer bei konstanter Temperatur wird als Ergebnis in μm angegeben, und zwar als Maximalwert ("max"; maximale Scherstrecke durch 15 minütige Belastung); als Minimalwert ("min"; Scherstrecke ("Restauslenkung") 15 min nach Entlastung; bei Entlastung erfolgt eine Rückbewegung durch Relaxation). Angegeben wird ebenfalls der elastische Anteil in Prozent ["elast"; elastischer Anteil = (max - min) x 100 / max].

Messmethoden (insbesondere Dreischichtenaufbauten):

90° Klebkraft Stahl - offene und abgedeckte Seite (Messmethode V1):

Die Bestimmung der Klebkraft Stahl erfolgt bei einem Prüfklima von 23 °C +/- 1 °C Temperatur und 50 % +/- 5 % rel. Luftfeuchte. Die Muster wurden auf 20 mm Breite zugeschnitten und auf eine Stahlplatte geklebt. Die Stahlplatte wird vor der Messung gereinigt und konditioniert. Dazu wird die Platte zunächst mit Aceton abgewischt und danach 5 Minuten an der Luft liegen gelassen, damit das Lösungsmittel abdampfen kann. Die dem Prüfuntergrund abgewandte Seite des Dreischichtverbundes wurde dann mit einer 50 μm Aluminiumfolie abgedeckt, wodurch verhindert wird, dass sich das Muster bei der Messung dehnt. Danach erfolgte das Anrollen des Prüfmusters auf den Stahluntergrund. Hierzu wurde das Band mit einer 2 kg Rolle fünfmal hin und her, bei einer Aufrollgeschwindigkeit von 10 m/min, überrollt. Unmittelbar nach dem Anrollen wurde die Stahlplatte in eine spezielle Halterung geschoben, die es ermöglicht das Muster in einem Winkel von 90 °C senkrecht nach oben abzuziehen. Die Klebkraftmessung erfolgte mit einer Zwick-Zugprüfmaschine. Beim Applizieren der abgedeckten Seite auf die Stahlplatte wird die offene Seite des Dreischichtverbundes zunächst gegen die 50 μm Aluminiumfolie kaschiert, das Trennmaterial entfernt und auf die Stahlplatte geklebt, analog angerollt und vermessen.

Die Messergebnisse beider Seiten, offen und abgedeckt, sind in N/cm angegeben und sind gemittelt aus drei Messungen.

Scherstandzeit - offene und abgedeckte Seite (Messmethode V2):

Die Musterpräparation erfolgte in einem Prüfklima von 23 °C +/- 1 °C Temperatur und 50 % +/- 5 % rel. Luftfeuchte. Das Prüfmuster wurde auf 13 mm zugeschnitten und auf eine Stahlplatte geklebt. Die Verklebungsfläche beträgt 20 mm x 13 mm (Länge x Breite). Vor der Messung wurde die Stahlplatte gereinigt und konditioniert. Dazu wird die Platte zunächst mit Aceton abgewischt und danach 5 Minuten an der Luft liegen gelassen, damit das Lösungsmittel abdampfen kann. Nach dem Verkleben wurde die offene Seite mit einer 50 μm Aluminiumfolie verstärkt und mit einer 2 kg Rolle zweimal hin und her überrollt. Anschließend wurde eine Gurtschlaufe am überstehenden Ende des Dreischichtverbundes angebracht. Das Ganze wurde dann an einer geeigneten Vorrichtung aufgehängt und mit 10 N belastet. Die Aufhängvorrichtung ist so beschaffen, dass das Gewicht die Probe in einem Winkel von 179 ° +/- 1 ° belastet. Dadurch ist sichergestellt, dass sich der Dreischichtverbund nicht von der Plattenunterkante abschälen kann. Die gemessene Scherstandzeit, die Zeit zwischen Aufhängen und Abfallen des Musters, ist in Minuten angegeben und entspricht dem Mittelwert aus drei Messungen. Zur Messung der abgedeckten Seite wird die offene Seite zunächst mit der 50 μm Aluminiumfolie verstärkt, das Trennmaterial entfernt und auf die Prüfplatte analog der Beschreibung geklebt. Die Messung wird bei Normalklima (23 °C, 55 % Luftfeuchtigkeit) durchgeführt.

Kommerziell erhältliche, eingesetzte Chemikalien:

| *Chemische Verbindung* | *Handelsname* | *Hersteller* | *CAS-Nr.* |
|---|---|---|---|
| 2,2'-Azobis(2-methylbutyronitril) | Vazo® 67 | DuPont | 13472-08-7 |
| 2,2'-Azobis(isobutyronitril), AIBN | Vazo® 64 | DuPont | 78-67-1 |
| Bis-(4-*tert*-butylcyclohexyl)peroxydicarbonat | Perkadox® 16 | Akzo Nobel | 15520-11-3 |
| Klebharz auf Terpen-Phenolbasis (Erweichungspunkt 105 °C, Hydroxylwert 30-60) | Dertophene® T105 | DRT, Frankreich | 73597-48-5 |
| Klebharz auf Terpen-Phenolbasis (Erweichungspunkt 95 °C, Hydroxylwert 20-50) | Dertophene® T | DRT, Frankreich | 73597-48-5 |
| Epoxidiertes Sojabohnenöl | Merginat ESBO-02 | Hobum Oleochemicals | 8013-07-08 |
| Epoxidiertes Leinsamenöl | Merginat ELO | Hobum Oleochemicals | 8016-11-13 |

(fortgesetzt)

| *Chemische Verbindung* | *Handelsname* | *Hersteller* | *CAS-Nr.* |
|---|---|---|---|
| Gemisch aus epoxidierten Fettsäuremethylestern | Merginat ESME | Hobum Oleochemicals | 68082-35-9 |
| Epoxidiertes Sojabohnenöl | Vikoflex® 7170 | Arkema | 8013-07-8 |
| Pentaerythrittetraglycidylether | Polypox® R16 | Dow | 3126-63-4 |
| 3,4-Epoxycyclohexylmethyl-3,4-epoxycyclohexancarboxylat | Uvacure® 1500 | Cytec Industries Inc. | 2386-87-0 |
| 1,2,7,8-Diepoxyoctan | | Sigma-Aldrich | 2426-07-5 |
| Isophorondiamin | | Sigma-Aldrich | 2855-13-2 |

alle Spezifikationsangaben bei 20 °C.

Beispiele Haftklebemassen:

**Herstellung der Ausgangspolymere für die Beispiele B1 bis B8 sowie Vergleichsbeispiele VB9 bis VB13:**

Im Folgenden wird die Präparation der Ausgangspolymere beschrieben. Die untersuchten Polymere werden konventionell über eine freie radikalische Polymerisation in Lösung hergestellt.

Basispolymer P1:

Ein für radikalische Polymerisationen konventioneller Reaktor wurde mit 30 kg 2-Ethylhexylacrylat, 67 kg n-Butylacrylat, 3 kg Acrylsäure und 66 kg Aceton/Isopropanol (96:4) befüllt. Nach 45minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 50 g 2,2'-Azobis(2-methylbutyronitril) zugegeben und nach 4 h wurde mit 20 kg Aceton/Isopropanol-Gemisch (96:4) verdünnt.

Nach 5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,6 %, einen K-Wert von 79,6, ein mittleres Molekulargewicht von $M_w$ = 1.557.000 g/mol, Polydispersität PD ($M_w/M_n$) = 12,6.

Basispolymer P2:

Ein für radikalische Polymerisationen konventioneller Reaktor wurde mit 47,5 kg 2-Ethylhexylacrylat, 47,5 kg n-Butylacrylat, 5 kg Acrylsäure und 66 kg Aceton/Isopropanol (96:4) befüllt. Nach 45minütiger Durchleitung von Stickstoffgas unter Rühren wurde der Reaktor auf 58 °C hochgeheizt und 50 g 2,2'-Azobis(2-methylbutyronitril) hinzugegeben. Anschließend wurde das äußere Heizbad auf 75 °C erwärmt und die Reaktion konstant bei dieser Außentemperatur durchgeführt. Nach 1 h wurden erneut 50 g 2,2'-Azobis(2-methylbutyronitril) zugegeben und nach 4 h wurde mit 20 kg Aceton/Isopropanol-Gemisch (96:4) verdünnt.

Nach 5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat einen Umsatz von 99,7 %, einen K-Wert von 72,3, ein mittleres Molekulargewicht von $M_w$ = 1.085.600 g/mol, eine Polydispersität PD ($M_w/M_n$) = 23,9.

Basispolymer P3 (viskoelastischer Träger):

Analog Beispiel P1 wurden 62 kg 2-Ethylhexylacrylat, 32 kg n-Butylacrylat und 12 kg Acrylsäure in 66 kg Aceton/Isopropanol (95:5) polymerisiert. Initiiert wurde zweimal mit jeweils 50 g 2,2'-Azobis(2-methylbutyronitril), zweimal mit jeweils 150 g Bis-(4-tert-butylcyclohexyl)peroxydicarbonat und verdünnt mit 20 kg Aceton/Isopropanol-Gemisch (95:5). Nach 22 h Reaktionszeit wurde die Polymerisation abgebrochen und auf Raumtemperatur abgekühlt.

Das Polyacrylat hat einen Umsatz von 99,6 %, einen K-Wert von 55,6 und ein mittleres Molekulargewicht von $M_w$ = 533.000 g/mol, Polydispersität PD ($M_w/M_n$) = 9,2.

Basispolymer P4 (Haftklebemasse für Dreischichtaufbau in Kombination mit viskoelastischem Träger):

Analog Beispiel P1 wurden 24,0 kg 2-Ethylhexylacrylat, 12,0 kg n-Butylacrylat und 4,0 kg Acrylsäure in 26,7 kg Aceton/ Benzin 60/95 (1:1) polymerisiert. Nach 45minütiger Durchleitung von Stickstoffgas unter Rühren wurde der Reaktor auf 58 °C hochgeheizt und 30 g AIBN hinzugegeben. Anschließend wurde das äußere Heizbad auf 75 °C erwärmt und die Reaktion konstant bei dieser Außentemperatur durchgeführt. Nach 1 h Reaktionszeit wurden wiederum 30 g AIBN hinzugegeben. Nach 4 und 8 h wurde mit jeweils 10,0 kg Aceton/Benzin 60/95 (1:1) Gemisch verdünnt. Zur Reduktion der Restinitiatoren wurden nach 8 und nach 10 h jeweils 90 g Bis-(4-tert-butylcyclohexyl)peroxydicarbonat hinzugegeben. Die Reaktion wurde nach 24 h Reaktionszeit abgebrochen und auf Raumtemperatur abgekühlt.

Das Polyacrylat hat einen Umsatz von 99,7 %, einen K-Wert von 46,9 und ein mittleres Molekulargewicht von $M_w$ = 1.500.900 g/mol, Polydispersität PD ($M_w/M_n$) = 17,0.

Verfahren 1: Aufkonzentration / Herstellung der Schmelzhaftkleber

Die Acrylatcopolymere (Basispolymere P1 bis P3) werden mittels Einschneckenextruder (Aufkonzentrationsextruder, Berstorff GmbH, Deutschland) weitestgehend vom Lösungsmittel befreit (Restlösemittelgehalt $\leq$ 0,3 Gew-%; vgl. bei den einzelnen Beispielen). Exemplarisch sind hier die Parameter der Aufkonzentration des Basispolymer P1 dargestellt. Die Drehzahl der Schnecke betrug 150 U/min, der Motorstrom 15 A, es wurde ein Durchsatz von 58,0 kg flüssig/h realisiert. Zur Aufkonzentration wurde an drei verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

Verfahren 2: Herstellung der modifizierten Schmelzhaftkleber und viskoelastischen Träger

Die nach dem oben erläuterten Verfahren 1 hergestellten Acrylatschmelzhaftkleber wurden direkt in einen nachgeschalteten Welding-Doppelschneckenextruder (Welding Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurde das Harz Dertophene® T105 in Zone 1 zudosiert und homogen eingemischt. Exemplarisch sind hier für die Harzcompoundierung mit dem Basispolymer P1 die Parameter dargelegt. Drehzahl betrug 451 U/min, der Motorstrom 42 A, es wurde ein Durchsatz von 30,1 kg/h realisiert. Die Temperaturen der Zonen 1 und 2 betrugen jeweils 105 °C, die Schmelzetemperatur in Zone 1 betrug 117 °C und die Massetemperatur bei Austritt (Zone 3) bei 100 °C.

Verfahren 3: Herstellung der erfindungsgemäßen Klebebänder, Abmischung mit dem Vernetzer-Beschleuniger-System für die thermischen Vernetzung und Beschichtung

Die nach den Verfahren 1 und 2 hergestellten Acrylatschmelzhaftkleber wurden in einem Fütterextruder (Einschneckenförderextruder der Firma Troester GmbH & Co KG, Deutschland) aufgeschmolzen und mit diesem als Polymerschmelze in einen Doppelschneckenextruder gefördert (Fa. Leistritz, Deutschland, Bez. LSM 30/34). Das Aggregat wird von außen elektrisch beheizt und über verschiedene Gebläse luftgekühlt und ist so konzipiert, dass bei guter Verteilung des Vernetzers bzw. des Vernetzers und des Beschleunigers in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzer und ggf. Beschleuniger erfolgt mit geeignetem Dosierequipment gegebenenfalls an mehreren Stellen (vgl. Figur 1: Dosierstellen 1.1 und 1.2) und gegebenenfalls unter Verwendung von Dosierhilfsmitteln in die druckfreien Förderzonen des Doppelschneckenextruders.

Nach Austritt der fertig compoundierten, das heißt mit dem Vernetzer und ggf. dem Beschleuniger abgemischten Klebmasse aus dem Doppelschneckenextruder (Austritt: Runddüse, 5 mm Durchmesser), erfolgt die Beschichtung nach Figur 1 auf ein bahnförmiges Trägermaterial. Die Zeit zwischen Zudosierung des Vernetzers bzw. des Vernetzers und des Beschleunigers bis zum Ausformen bzw. Beschichten wird als Verarbeitungszeit bezeichnet. Die Verarbeitungszeit gibt den Zeitraum an, in welcher die mit dem Vernetzer und ggf. Beschleuniger abgemischte Klebmasse bzw. die viskoelastische Trägerschicht mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerks wird nicht angetrieben.

In den nachfolgenden Beispielen und in den Tabellen 1 sowie Tabelle 3 bis Tabelle 4 werden die eingesetzten Formulierungen, die Herstellparameter und die erzielten Eigenschaften jeweils näher beschrieben.

Verfahren 4: Herstellung der modifizierten Schmelzhaftkleber und viskoelastischen Träger

Das Basispolymer P4 wurde mit 0,2 Gew-% Uvacure® 1500 bezogen auf das Polymer abgemischt, auf einen Feststoffgehalt von 30 % mit Aceton verdünnt und dann aus Lösung auf eine silikonisierte Trennfolie (50 µm Polyester) bzw. auf eine 23 µm dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C). Der Masseauftrag betrug 50 g/m$^2$.

Beispiel B1 bis B8 sowie Vergleichsbeispiele VB9 bis VB13:

Die Basispolymere P1 bis P2 werden gemäß dem beschriebenen Polymerisationsverfahren polymerisiert, gemäß Verfahren 1 aufkonzentriert (Feststoffgehalt 99,8 %) und anschließend gemäß Verfahren 2 mit Harz abgemischt. Diese harzmodifizierten Acrylat-Hotmeltmassen wurden dann gemäß Verfahren 3 kontinuierlich mit dem Vernetzer und ggf. dem Beschleuniger compoundiert.

Detaillierte Beschreibung: In dem in Verfahren 3 beschriebenen Doppelschneckenextruder wurde ein Gesamtmassestrom bestehend aus den Basispolymeren P1 bis P2 und Terpen-Phenol-Harz von 533,3 g/min mit dem Epoxidvernetzer und gegebenenfalls dem Aminbeschleuniger abgemischt. Die Dosierung des Epoxids erfolgt über eine Schlauchpumpe an Dosierstelle 1.1 und die des gegebenenfalls verwendeten Amins separat über eine Schlauchpumpe an Dosierstelle 1.2 (siehe Figur 1).

Die Verarbeitungszeit der fertigen Polymermassen ("Compounds") war größer 7 min bei einer durchschnittlichen Massetemperatur von 125 °C nach dem Verlassen des Leistritz-Doppelschneckenextruders. Die Beschichtung erfolgt an einem 2-Walzenauftragswerk gemäß Figur 1 bei Walzenoberflächentemperaturen von jeweils 100 °C und einem Masseauftrag von jeweils 100 g/m$^2$ auf 23 µm PET-Folie. Von den so hergestellten Klebebändern wurden die Klebkraft auf Stahl und PE bei Raumtemperatur, Scherstandszeiten bei Raumtemperatur und Mikroschwerwege gemessen. Nach 14 Tagen Raumtemperaturlagerung verändern sich die maximalen Mikroscherwege nur noch unwesentlich und die jeweiligen Messwerte der erfindungsgemäßen Beispiele und der Vergleichsbeispiele beziehen sich jeweils auf Produkte, die einen stabilen Vernetzungszustand erreicht haben. Die klebtechnischen Daten der Beispiele B1 bis B8 sowie der Vergleichsbeispiele VB9 bis VB13 sind in Tabelle 2 zusammengefasst. Mit den erfindungsgemäßen Beispielen wird gezeigt, dass sehr leistungsfähige Klebebänder hergestellt werden können, die sich unter anderem durch gute Klebkräfte auf polaren und unpolaren Substraten (Stahl und Polyethylen) und gute kohäsive Eigenschaften auch unter Temperatureinfluss auszeichnen.

Tabelle 1: Erfindungsgemäße Beispiele B1 bis B8 und Vergleichsbeispiele VB9 bis VB13

| | | Compoundieren gemäß Verfahren 2 | | |
|---|---|---|---|---|
| Beispiel | Basispolymer | Polymer und Zuschlagstoffe | Einsatzstoffe und -mengen | |
| | | | Vernetzer / Beschleuniger | Gew-% auf Polymer |
| B1 | P1 | 68 Teile Polymer P1 + 32 Teile Harz DT 105 | Merginat ESBO-02 | 0,5 |
| | | | Isophorondiamin | 1,0 |
| B2 | P1 | 68 Teile Polymer P1 + 32 Teile Harz DT 105 | Merginat ESBO-02 | 0,5 |
| | | | - | - |
| B3 | P1 | 68 Teile Polymer P1 + 32 Teile Harz DT 105 | Merginat ESBO-02 | 2,0 |
| | | | Isophorondiamin | 1,0 |
| B4 | P1 | 68 Teile Polymer P1 + 32 Teile Harz DT 105 | Merginat ESBO-02 | 2,0 |
| | | | - | - |
| B5 | P1 | 68 Teile Polymer P1 + 32 Teile Harz DT 105 | Merginat ESBO-02 | 5,0 |
| | | | Isophorondiamin | 1,0 |
| B6 | P1 | 68 Teile Polymer P1 + 32 Teile Harz DT 105 | Merginat ESBO-02 | 5,0 |
| | | | - | - |
| B7 | P2 | 59,5 Teile Polymer P2 + 40,5 Teile Harz T | Vikoflex 7170 | 0,17 |
| | | | Isophorondiamin | 1,26 |

(fortgesetzt)

| | | Compoundieren gemäß Verfahren 2 | | |
|---|---|---|---|---|
| Beispiel | Basispolymer | Polymer und Zuschlagstoffe | Einsatzstoffe und -mengen | |
| | | | Vernetzer<br>Beschleuniger | Gew-% auf Polymer |
| B8 | P2 | 59,5 Teile Polymer P2 + 40,5 Teile Harz T | Merginat ESME | 0,17 |
| | | | Isophorondiamin | 1,26 |
| VB9 | P1 | 68 Teile Polymer P1 + 32 Teile Harz DT 105 | Polypox R16 | 0,235 |
| | | | Isophorondiamin | 1,0 |
| VB10 | P1 | 68 Teile Polymer P1 + 32 Teile Harz DT 105 | Polypox R16 | 0,235 |
| | | | - | - |
| VB11 | P1 | 68 Teile Polymer P1 + 32 Teile Harz DT 105 | Uvacure 1500 | 0,220 |
| | | | Isophorondiamin | 1,0 |
| VB12 | P1 | 68 Teile Polymer P1 + 32 Teile Harz DT 105 | Uvacure 1500 | 0,220 |
| | | | - | - |
| VB13 | P1 | 68 Teile Polymer P1 + 32 Teile Harz DT 105 | 1,2,7,8-Diepoxyoctan | 0,195 |
| | | | Isophorondiamin | 1,0 |

Die Vernetzerkonzentrationen in den Vergleichsbeispielen VB9 bis VB13 sind so gewählt, dass die Rezepturen das gleiche Epoxidäquivalent wie die Beispiele B1 und B2 aufweisen, sodass die Vernetzer miteinander verglichen werden können.

Die erfindungsgemäßen Beispiele, in denen epoxidierte Pflanzenöle als Vernetzer verwendet werden, zeigen die gewünschte ausgeglichene Kombination von Adhäsion (Klebkraft) und Kohäsion, was an den Scherstandzeiten erkennbar ist. Weiterhin ist überraschend, dass der Verzicht auf einen Beschleuniger im Gegensatz zu den Vergleichsbeispielen dennoch zu vernetzten Klebemassen führt, die nahezu identische Eigenschaften aufweisen, wie die aus den Rezepturen mit Beschleuniger resultieren Haftklebemassebeispiele. Der Vorteil der Beschleuniger-freien Haftklebemassen liegt, wie an den Beispielen B5 und B6 erkennbar, in der verbesserten Verarbeitungszeit während der Extrusion. So konnte das Beispiel B5 mit Beschleuniger und einer hohen Vernetzerkonzentration nicht gelfrei beschichtet werden, in Beispiel 6 jedoch schon. In den Beispielen B7 und B8 wird ein Vergleich zwischen den besonders bevorzugten Fettsäureglyceriden mit Fettsäuremethylestern (B8, Merginat ESME) gezeigt. Es ist deutlich zu erkennen, dass der etwas weniger flexible Vernetzer im Beispiel B8 ebenfalls zu einer verbesserten Kohäsion führt. Die bevorzugten Fettsäureglyceride zeigen jedoch ein nochmals besseres Auffließverhalten auf dem unpolaren Substrat (PE), was zu einer besseren Klebkraft auf dem unpolaren Substrat führt.

Ohne Beschleuniger führten alle Rezepturen mit den nicht erfindungsgemäßen Epoxidvernetzern zu unvernetzten Haftklebemassen (VB10 und VB12). Das Vergleichsbeispiel VB9 hat zum einen den Nachteil, dass aufgrund des Vernetzers die Formulierung nicht chlorfrei ist, und zum anderen weist die Haftklebemasse eine deutlich geringere Kohäsion und geringere Klebkräfte als das erfindungsgemäße Beispiel mit einem äquimolaren Epoxidgehalt auf (B1). Das Vergleichsbespiel VB11 ist zwar chlorfrei, jedoch führt der Vernetzer im Vergleich zu B1 trotz der äquimolaren Menge an Epoxidfunktionalitäten zu einem deutlich dichteren bzw. unflexibleren Netzwerk, was anhand der hohen Scherstandzeiten und den deutlich geringen Klebkräften zu erkennen ist.

Tabelle 2: Klebtechnische Daten der erfindungsgemäßen Beispiele B1 bis B8 und Vergleichsbeispiele VB9 bis VB13

| **Beispiel** | **Basispolymer** | | | **Klebtechnische Eigenschaften nach einer Lagerung der Muster von 14 Tagen bei Raumtemperatur** | | | | | **Halogengehalt** |
|---|---|---|---|---|---|---|---|---|---|
| | Polymer | Trägerfolie | Masseauftrag [g/m$^2$] | Klebkraft Stahl [N/cm] | Klebkraft PE [N/cm] | SSZ 10N, 23°C [min] | SSZ 10N, 70°C [min] | MSW 40°C / elast. Anteil [µm] / [%] | [mg Hal/kg] |
| B1 | P1 | 23µm PET-Folie | 100 | 9,88 | 5,06 | 1557 | < 10 | 304 / 61 | n.d. |
| B2 | P1 | 23µm PET-Folie | 100 | 10,72 | 5,09 | 1542 | < 10 | 314 / 58 | n.d. |
| B3 | P1 | 23µm PET-Folie | 100 | 8,21 | 4,12 | 1851 | 96 | 139 / 93 | n.d. |
| B4 | P1 | 23µm PET-Folie | 100 | 8,65 | 4,25 | 1863 | 89 | 156 / 86 | n.d. |
| B5 | P1 | 23µm PET-Folie | 100 | Formulierung ist vergelt | | | | - | n.d. |
| B6 | P1 | 23µm PET-Folie | 100 | 6,94 | 2,90 | 3736 | 182 | 47 / 95 | n.d. |
| B7 | P2 | 23µm PET-Folie | 100 | 8,76 | 5,99 | 3614 | 278 | 474 / 53 | n.d. |
| B8 | P2 | 23µm PET-Folie | 100 | 8,22 | 4,20 | 5740 | 350 | 286 / 73 | n.d. |
| VB9 | P1 | 23µm PET-Folie | 100 | 7,90 | 5,30 | 623 | < 10 | 791 / 57 | 180 |
| VB10 | P1 | 23µm PET-Folie | 100 | Formulierung ist nicht vernetzt | | | | größer 2.000 / 0 | 180 |
| VB11 | P1 | 23µm PET-Folie | 100 | 5,63 | 2,23 | > 10.000 | 896 | 120 / 88 | n.d. |
| VB12 | P1 | 23µm PET-Folie | 100 | Formulierung ist nicht vernetzt | | | | größer 2.000 / 0 | n.d. |
| VB13 | P1 | 23µm PET-Folie | 100 | 3,80 | 1,75 | > 10.000 | 920 | 150 / 95 | n.d. |

Klebkraft Stahl / PE, Messmethode H1
SSZ = Scherstandzeit, Messmethode H2
MSW = Mikroscherweg, Messmethode H3
Halogengehalt, Messmethode A5; n.d. = nicht detektierbar

**Beispiele Viskoelastische Träger und Dreischichtaufbauten:**

Verfahren 5: Herstellung der 3-Schichtaufbauten mittels 2-Walzenkalander

Das Basispolymer P3 wurde analog Verfahren 1 von den Lösemitteln befreit und ggf. anschließend analog Verfahren 2 mit Zusatzstoffen versetzt. Im Anschluss wurde das Verfahren, wie bei der Figur 3 beschrieben, durchgeführt. Mittels Verteilerdüse 1 wird die mit dem Vernetzer und ggf. dem Beschleuniger fertig compoundierte viskoelastische Masse 3 dem Walzenspalt zugeführt. Die Ausformung der viskoelastischen Masse zu einem viskoelastischen Film erfolgt zwischen den Kalanderwalzen W1 und W2 im Walzenspalt zwischen zwei Selbstklebemassen 6a und 6b, die ihrerseits auf anti-adhäsiv ausgerüsteten Trägermaterialien 5a und 5b beschichtet zugeführt werden. Dabei kommt es gleichzeitig zur Ausformung der viskoelastischen Masse auf die eingestellte Schichtdicke und zur Beschichtung mit den beiden zugeführten Selbstklebemassen. Um die Verankerung der Selbstklebemassen 6a und 6b auf der ausgeformten, viskoelastischen Trägerschicht 4 zu verbessern, werden die Selbstklebemassen vor der Zuführung in den Walzenspalt mittels Corona-Station 8 coroniert (Corona-Anlage der Firma Vitaphone, Dänemark, 100 $W \cdot min/m^2$). Diese Behandlung führt nach der Herstellung des Dreischichtverbundes zu einer verbesserten chemischen Anbindung an die viskoelastische Trägerschicht.

Die Bahngeschwindigkeit bei Durchlaufen der Beschichtungsanlage beträgt 30 m/min.

Nach Verlassen des Walzenspaltes wird ggf. ein anti-adhäsiver Träger 5a ausgedeckt und das fertige Dreischichtprodukt 7 mit dem verbleibenden zweiten anti-adhäsiven Träger 5b aufgewickelt.

Im Folgenden werden konkrete Beispiele zur Herstellung der Selbstklebemassen und Beschichtung der erfindungsgemäßen Klebebänder vorgestellt, ohne dass durch die Wahl der angegebenen Formulierungen, Konfigurationen und Prozessparameter die Erfindung unnötig eingeschränkt werden soll.

Beispiele MT1 bis MT4 sowie der Vergleichsbeispiele VMT5 und VMT6

Das Basispolymer P3 wurde gemäß Verfahren 1 aufkonzentriert (Feststoffgehalt 99,7%) und anschließend gemäß Verfahren 3 im Doppelschneckenextruder kontinuierlich mit dem Vernetzer und gegebenenfalls Beschleuniger compoundiert.

Die Beschichtung zur Erzeugung des viskoelastischen Träger VT1 und VT4 sowie der Vergleichsbeispiele VVT5 und VVT6 aus dem Basispolymer P3 zwischen die zuvor gemäß Verfahren 4 auf silikonisierte Polyesterfolien beschichtete Masseschichten P4 erfolgt am 2-Walzenauftragswerk bei Walzentemperaturen von 100 °C gemäß Verfahren 5. Die Schichtdicken der viskoelastischen Träger VT1 bis VT4 sowie der Vergleichsträger VVT5 und VVT6 betrugen 900 µm. Die Coronaleistung betrug 100 $W \cdot min/m^2$. Nach 7 Tagen Raumtemperaturlagerung wurden die klebtechnischen Daten jeweils von der offenen und abgedeckten Seite gemessen. Die Daten der Beispiele MT1 und MT4 sowie VMT5 und VMT6 sind in Tabelle 4 zusammengefasst. MT wird hier als Abkürzung für Montage-Tape verwendet und VMT für die dazugehörigen Vergleichsbeispiele.

Tabelle 3: Erfindungsgemäße Beispiele VT1 bis VT4 und Vergleichsbeispiele VVT5 bis VVT6

| Beispiel | Basispolymer | Vernetzer | Gew-% auf Polymer |
|---|---|---|---|
| VT1 | P3 | Merginat ESBO-02 | 1,0 |
| VT2 | P3 | Merginat ELO | 1,0 |
| VT3 | P3 | Merginat ESME | 1,0 |
| VT4 | P3 | Merginat EP-2377 | 1,0 |
| VVT5 | P3 | Polypox R16 | 0,47 |
| VVT6 | P3 | Uvacure 1500 | 0,44 |

Die Vernetzerkonzentrationen in den Vergleichsbeispielen VVT5 und VVT6 sind so gewählt, dass die Rezepturen das gleiche Epoxidäquivalent wie der viskoelastische Träger VT1 aufweisen, sodass die Vernetzer miteinander verglichen werden können. Die Beispiele VT1 bis VT4 sowie das Vergleichsbeispiel VVT5 enthielten keine Beschleuniger. In dem Vergleichsbeispiel VVT6 wurden 1,0 Gew-% Isophorondiamin bezogen auf das Polymer eingesetzt.

Wie den Daten der Tabelle 4 zu entnehmen ist, haben die erfinderisch doppelseitig klebenden Montageklebebänder sehr gute klebtechnische Daten. Besonders positiv ist das ausgewogene Klebprofil der jeweiligen Seiten. Bei gleicher Klebmassenschicht auf beiden Seiten des Klebebandes zeigen diese nahezu gleiche klebtechnische Daten. Dies zeigt die homogene Vernetzung durch die Schicht hindurch. Zudem zeigen diese dreischichtigen Klebebänder keine

Delaminierung. Die Verankerung der Schichten untereinander ist durch die Coronabehandlung der Haftklebeschichten und der Nachvernetzung der angrenzenden viskoelastische Trägerschicht sehr gut. Anhand des Vergleichsbeispiels VMT5 ist zu erkennen, dass der Vernetzer ohne Beschleuniger zu einer Untervernetzung führt (kohäsives Versagen bei den Scherstandzeiten und hohe Adhäsion), wohingegen erneut das Netzwerk des Vergleichsbeispiels VMT6 zu eng bzw. unflexibel ist, dass sehr geringe Klebkräfte in Kombination mit hohen Scherstandzeiten resultieren.

Tabelle 4: Produktaufbau und klebtechnische Daten der Dreischichtaufbauten

| **Beispiel** | **Dreischichtprodukt** | | | **Trägerdicke [µm]** | **Klebkraft Stahl, [N/cm]** | | **Scherstandzeit 10 N 23°C [min]** | |
|---|---|---|---|---|---|---|---|---|
| | Haftkleber 1 | Viskoelastische Trägerschicht | Haftkleber 2 | | offene Seite | abgedeckte Seite | offene Seite | abgedeckte Seite |
| MT1 | 50 g/m² P4 | VT1 | 50 g/m² P4 | 900 | 34,2 | 33,7 | > 10000 | > 10000 |
| MT2 | 50 g/m² P4 | VT2 | 50 g/m² P4 | 900 | 35,2 | 34,6 | > 10000 | > 10000 |
| MT3 | 50 g/m² P4 | VT3 | 50 g/m² P4 | 900 | 33,6 | 32,5 | > 10000 | > 10000 |
| MT4 | 50 g/m² P4 | VT4 | 50 g/m² P4 | 900 | 33,7 | 33,5 | > 10000 | > 10000 |
| VMT5 | 50 g/m² P4 | VVT5 | 50 g/m² P4 | 900 | 45,1 | 44,9 | 2.356 (K) | 2.456 (K) |
| VMT6 | 50 g/m² P4 | VVT6 | 50 g/m² P4 | 900 | 15,2 | 15,3 | > 10000 | > 10000 |
| Klebkraft Stahl = Messmethode V1<br>Scherstandzeit = Messmethode V2 | | | | | | | | |

**Patentansprüche**

**1.** Verfahren zur Herstellung von vernetzten Polymeren, wobei

ein Polyacrylat, das mindestens eine Carboxygruppe umfasst, durch Reaktion mit einem mindestens zweifach epoxidierten Vernetzer zumindest teilweise vernetzt wird, und
der mindestens zweifach epoxidierte Vernetzer aus einer Gruppe ausgewählt ist, die Fettsäuren, Fettsäureester, Fettalkohole, Ester von Fettalkoholen und Kombinationen hiervon umfasst.

**2.** Verfahren nach Anspruch 1, wobei eine Fettsäure bzw. ein Fettalkohol, auf dem der mindestens zweifach epoxidierte Vernetzter basiert, eine lineare oder eine verzweigte Kohlenstoffkette mit mindestens 10 und höchstens 24 C-Atomen aufweist.

**3.** Verfahren nach Anspruch 1 oder 2, wobei der mindestens zweifach epoxidierte Vernetzer aus einer Gruppe ausgewählt ist, die Ester einer Fettsäure mit einem Fettalkohol, Fettsäureglyceride und Kombinationen hiervon umfasst.

**4.** Verfahren nach einem der Ansprüche 1 bis 3, wobei der mindestens zweifach epoxidierte Vernetzer mindestens ein Fettsäureglycerid der allgemeinen Formel (I) umfasst:

$$\begin{array}{l} CH_2OR^1 \\ | \\ CHOR^2 \\ | \\ CH_2OR^3 \end{array} \qquad (I)$$

und hierbei

die Substituenten $R^1$, $R^2$ und $R^3$ jeweils unabhängig voneinander aus H, Acylrest und Acylrest einer Fettsäure ausgewählt sind, und
mindestens einer der Substituenten $R^1$, $R^2$ und $R^3$ ein Acylrest einer Fettsäure ist.

5. Verfahren nach Anspruch 4, wobei der Vernetzer ein mindestens dreifach epoxidiertes Fettsäureglycerid der Formel (I) umfasst und zwei oder drei der Substituenten $R^1$, $R^2$ und $R^3$ jeweils unabhängig voneinander ausgewählte Acylreste einer Fettsäure sind.

6. Verfahren nach einem der Ansprüche 1 bis 5, wobei der mindestens zweifach epoxidierte Vernetzer zu 0,1 bis 5,0 Gew-% bezogen auf das Polymer mit mindestens einer Carboxygruppe eingesetzt wird.

7. Verfahren nach einem der Ansprüche 1 bis 6, wobei das Polyacrylat auf einer Monomerenzusammensetzung basiert, die

   (a) Acrylsäurealkylester und/oder Methacrylsäurealkylester der folgenden Formel

   $$CH_2 = C(R^I)(COOR^{II}),$$

   wobei $R^I$ = H oder $CH_3$ und $R^{II}$ ein Alkylrest mit 1 bis 20 C-Atomen ist,
   (b) ein oder mehrere olefinisch ungesättigte Monomere mit funktionellen Gruppen, die für die Reaktion mit den Epoxidgruppen des Vernetzers geeignet sind, wobei zumindest eines der Monomere eine Carboxygruppe aufweist,
   (c) optional weitere Acrylate und/oder Methacrylate und/oder olefinisch ungesättigte Monomere, die mit den Monomeren (a) und (b) copolymerisierbar sind und nicht unter die Monomere (a) und (b) fallen,

   umfasst.

8. Verfahren nach einem der Ansprüche 1 bis 7, wobei das Verfahren die folgenden Schritte umfasst:

   - Erzeugen eines Polyacrylats, das mindestens eine Carboxygruppe umfasst,
   - Versetzen mit dem mindestens zweifach epoxidierten Vernetzer, optional Versetzen mit mindestens einem Beschleuniger und optional Versetzen mit mindestens einem Additiv, wodurch eine Polymermasse erhalten wird, die das Polymer umfasst,
   - Formgebung der Polymermasse, und
   - Vernetzen des Polyacrylats in der Polymermasse mit dem mindestens zweifach epoxidierten Vernetzer.

9. Verfahren nach einem der Ansprüche 1 bis 8, wobei mit mindestens einem Beschleuniger versetzt wird und der Beschleuniger aus einem sauren Katalysator, der eine Brønsted-Säure, eine Lewis-Säure oder Kombinationen hiervon umfasst, oder einer Base ausgewählt ist.

10. Verfahren nach Anspruch 9, wobei der Beschleuniger eine Stickstoffbase ist.

11. Verfahren nach einem der Ansprüche 1 bis 10, wobei mit mindestens einem Additiv versetzt wird und die Additive aus einer Gruppe ausgewählt sind, die klebrigmachende Harze, Füllstoffe, Additive zur Volumenerhöhung, Schutzmittel, Compoundierungsmittel, Farbstoffe, Pigmente, Weichmacher, weitere Polymere und Kombinationen hiervon umfasst.

12. Verfahren nach einem der Ansprüche 8 bis 11, wobei das Polyacrylat der Polymermasse bei der Formgebung als Schmelze vorliegt.

13. Verfahren nach einem der Ansprüche 8 bis 12, wobei bei der Formgebung ein Träger für Klebebänder mit der Polymermasse beschichtet wird.

14. Verwendung einer mindestens zweifach epoxidierten Verbindung, die aus einer Gruppe ausgewählt ist, die Fettsäuren, Fettsäureester, Fettalkohole, Ester von Fettalkoholen und Kombinationen hiervon umfasst,

   zum Vernetzen von Polyacrylaten, die mindestens eine Carboxygruppe umfassen, und
   zur Herstellung einer Haftklebemasse, eines Klebebandes, eines Trägers für Klebebänder oder einer Heißschmelzklebemasse, die auf einem Polyacrylat mit mindestens einer Carboxygruppe basieren.

15. Vernetztes Polyacrylat, das durch ein Verfahren nach einem der Ansprüche 1 bis 13 erhältlich ist.

**16.** Klebeband, das ein vernetztes Polyacrylat nach Anspruch 15 umfasst.

**17.** Träger für ein Klebeband, der ein vernetztes Polyacrylat nach Anspruch 15 umfasst.

**18.** Heißschmelzklebemasse, die ein Polyacrylat mit mindestens einer Carboxygruppe und einen mindestens zweifach epoxidierten Vernetzer zur Vernetzung des Polyacrylats umfasst, wobei der mindestens zweifach epoxidierte Vernetzer aus einer Gruppe ausgewählt ist, die Fettsäuren, Fettsäureester, Fettalkohole, Ester von Fettalkoholen und Kombinationen hiervon umfasst.

## Claims

**1.** Process for producing crosslinked polymers, wherein

a polyacrylate comprising at least one carboxyl group is at least partially crosslinked by reaction with an at least doubly epoxidized crosslinker, and
the at least doubly epoxidized crosslinker is selected from a group encompassing fatty acids, fatty acid esters, fatty alcohols, esters of fatty alcohols and combinations thereof.

**2.** Process according to Claim 1, wherein a fatty acid and/or fatty alcohol on which the at least doubly epoxidized crosslinker is based has a linear or a branched carbon chain having at least 10 and at most 24 carbon atoms.

**3.** Process according to Claim 1 or 2, wherein the at least doubly epoxidized crosslinker is selected from a group encompassing esters of a fatty acid with a fatty alcohol, fatty acid glycerides and combinations thereof.

**4.** Process according to any of Claims 1 to 3, wherein the at least doubly epoxidized crosslinker comprises at least one fatty acid glyceride of the general formula (I):

$$\begin{array}{l} CH_2OR^1 \\ | \\ CHOR^2 \\ | \\ CH_2OR^3 \end{array} \qquad (I)$$

and herein

the substituents $R^1$, $R^2$ and $R^3$ are selected independently of each other from H, acyl radical and acyl radical of a fatty acid, and
at least one of the substituents $R^1$, $R^2$ and $R^3$ is an acyl radical of a fatty acid.

**5.** Process according to Claim 4, wherein the crosslinker comprises an at least triply epoxidized fatty acid glyceride of the formula (I) and two or three of the substituents $R^1$, $R^2$ and $R^3$ are selected independently of each other and are acyl radicals of a fatty acid.

**6.** Process according to any of Claims 1 to 5, wherein the at least doubly epoxidized crosslinker is used at 0.1% to 5.0% by weight, based on the polymer having at least one carboxyl group.

**7.** Process according to any of Claims 1 to 6, wherein the polyacrylate is based on a monomer composition which comprises

(a) acrylic acid alkyl esters and/or methacrylic acid alkyl esters of the following formula

$$CH_2 = C(R^I)(COOR^{II}),$$

wherein $R^I$ = H or $CH_3$ and $R^{II}$ is an alkyl radical having 1 to 20 carbon atoms,
(b) one or more olefinically unsaturated monomers having functional groups suitable for the reaction with the epoxy groups of the crosslinker, at least one of the monomers having a carboxyl group,
(c) optionally further acrylates and/or methacrylates and/or olefinically unsaturated monomers which are

copolymerizable with the monomers (a) and (b) and not included among the monomers (a) and (b).

**8.** Process according to any of Claims 1 to 7, wherein the process comprises the following steps:

- generating a polyacrylate comprising at least one carboxyl group,
- adding the at least doubly epoxidized crosslinker, optionally adding at least one accelerator and optionally adding at least one additive, thereby obtaining a polymer compound comprising the polymer,
- shaping the polymer compound, and
- crosslinking the polyacrylate in the polymer compound with the at least doubly epoxidized crosslinker.

**9.** Process according to any of Claims 1 to 8, wherein at least one accelerator is added and the accelerator is selected from an acidic catalyst comprising a Brønsted acid, a Lewis acid or combinations thereof, or a base.

**10.** Process according to Claim 9, wherein the accelerator is a nitrogen base.

**11.** Process according to any of Claims 1 to 10, wherein at least one additive is added and the additives are selected from a group encompassing tackifying resins, fillers, additives for increasing volume, protective agents, compounding agents, dyes, pigments, plasticizers, further polymers and combinations thereof.

**12.** Process according to any of Claims 8 to 11, wherein the polyacrylate of the polymer compound is present during shaping as a melt.

**13.** Process according to any of Claims 8 to 12, wherein during shaping a carrier for adhesive tapes is coated with the polymer compound.

**14.** Use of an at least doubly epoxidized compound selected from a group encompassing fatty acids, fatty acid esters, fatty alcohols, esters of fatty alcohols and combinations thereof

for crosslinking polyacrylates comprising at least one carboxyl group, and
for producing a pressure sensitive adhesive compound, an adhesive tape, a carrier for adhesive tapes or a hotmelt adhesive compound which are based on a polyacrylate having at least one carboxyl group.

**15.** Crosslinked polyacrylate obtainable by a process according to any of Claims 1 to 13.

**16.** Adhesive tape comprising a crosslinked polyacrylate according to Claim 15.

**17.** Carrier for an adhesive tape, comprising a crosslinked polyacrylate according to Claim 15.

**18.** Hotmelt adhesive compound comprising a polyacrylate having at least one carboxyl group and an at least doubly epoxidized crosslinker for crosslinking the polyacrylate, wherein the at least doubly epoxidized crosslinker is selected from a group encompassing fatty acids, fatty acid esters, fatty alcohols, esters of fatty alcohols and combinations thereof.

## Revendications

**1.** Procédé de préparation de polymères réticulés, dans lequel

un polyacrylate, qui comprend au moins un groupe carboxy, est réticulé au moins partiellement par réaction avec un réticulant époxydé au moins deux fois et
le réticulant époxydé au moins deux fois est choisi dans un groupe qui comprend les acides gras, les esters d'acides gras, les alcools gras, les esters d'alcools gras et leurs combinaisons.

**2.** Procédé selon la revendication 1, dans lequel un acide gras ou un alcool gras, sur lequel est basé le réticulant époxydé au moins deux fois, présente une chaîne carbonée linéaire ou ramifiée présentant au moins 10 et au plus 24 atomes de carbone.

**3.** Procédé selon la revendication 1 ou 2, dans lequel le réticulant époxydé au moins deux fois est choisi dans un groupe

qui comprend les esters d'un acide gras avec un alcool gras, les glycérides d'acide gras et leurs combinaisons.

4. Procédé selon l'une des revendications 1 à 3, dans lequel le réticulant époxydé au moins deux fois comprend au moins un glycéride d'acide gras de formule générale (I) :

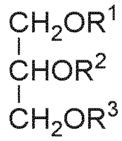

(I)

dans laquelle

les substituants $R^1$, $R^2$ et $R^3$ sont choisis, à chaque fois indépendamment les uns des autres, parmi H, un radical acyle et un radical acyle d'un acide gras et
au moins l'un des substituants $R^1$, $R^2$ et $R^3$ est un radical acyle d'un acide gras.

5. Procédé selon la revendication 4, dans lequel le réticulant comprend un glycéride d'acide gras époxydé au moins trois fois de formule (I) et deux ou trois des substituants $R^1$, $R^2$ et $R^3$ représentent, à chaque fois indépendamment les uns des autres, des radicaux acyle d'un acide gras.

6. Procédé selon l'une des revendications 1 à 5, dans lequel le réticulant époxydé au moins deux fois est utilisé à raison de 0,1 à 5,0% en poids par rapport au polymère présentant au moins un groupe carboxy.

7. Procédé selon l'une des revendications 1 à 6, dans lequel le polyacrylate est à base d'une composition monomère qui comprend

(a) des esters alkyliques de l'acide acrylique et/ou des esters de l'acide méthacrylique de la formule suivante

$$CH_2 = C(R^I)(COOR^{II}),$$

dans laquelle $R^I$ = H ou $CH_3$ et $R^{II}$ représente un radical alkyle présentant 1 à 20 atomes de carbone,
(b) un ou plusieurs monomères oléfiniquement insaturés présentant des groupes fonctionnels, qui sont appropriés pour la réaction avec les groupes époxyde du réticulant, au moins l'un des monomères présentant un groupe carboxy,
(c) éventuellement d'autres acrylates et/ou méthacrylates et/ou monomères oléfiniquement insaturés, qui sont copolymérisables avec les monomères (a) et (b) et qui ne relèvent pas des monomères (a) et (b).

8. Procédé selon l'une des revendications 1 à 7, le procédé comprenant les étapes suivantes :

- production d'un polyacrylate, qui comprend au moins un groupe carboxy,
- réticulation à l'aide du réticulant époxydé au moins deux fois, ajout éventuel d'au moins un accélérateur et ajout éventuel d'au moins un additif, suite à quoi une masse polymère est obtenue, qui comprend le polymère,
- façonnage de la masse polymère et
- réticulation du polyacrylate dans la masse polymère avec le réticulant époxydé au moins deux fois.

9. Procédé selon l'une des revendications 1 à 8, dans lequel au moins un accélérateur est ajouté et l'accélérateur est choisi parmi un catalyseur acide, qui comprend un acide de Brønsted, un acide de Lewis ou des combinaisons de ceux-ci, ou une base.

10. Procédé selon la revendication 9, dans lequel l'accélérateur est une base azotée.

11. Procédé selon l'une des revendications 1 à 10, dans lequel au moins un additif est ajouté et les additifs sont choisis dans un groupe qui comprend les résines rendant adhésif, les charges, les additifs pour l'augmentation de volume, les agents de protection, les agents de compoundage, les colorants, les pigments, les plastifiants, d'autres polymères et leurs combinaisons.

12. Procédé selon l'une des revendications 8 à 11, dans lequel le polyacrylate de la masse polymère se trouve sous forme

de masse fondue lors du façonnage.

13. Procédé selon l'une des revendications 8 à 12, dans lequel un support pour rubans adhésifs est revêtu par la masse polymère lors du façonnage.

14. Utilisation d'un composé époxydé au moins deux fois, qui est choisi dans un groupe qui comprend les acides gras, les esters d'acides gras, les alcools gras, les esters d'alcools gras et leurs combinaisons,

    pour la réticulation de polyacrylates qui comprennent au moins un groupe carboxy et
    pour la préparation d'une masse autoadhésive, d'un ruban adhésif, d'un support pour rubans adhésifs ou d'une masse adhésive thermofusible, qui sont à base d'un polyacrylate présentant au moins un groupe carboxy.

15. Polyacrylate réticulé, pouvant être obtenu par un procédé selon l'une des revendications 1 à 13.

16. Ruban adhésif qui comprend un polyacrylate réticulé selon la revendication 15.

17. Support pour un ruban adhésif qui comprend un polyacrylate réticulé selon la revendication 15.

18. Masse adhésive thermofusible qui comprend un polyacrylate présentant au moins un groupe carboxy et un réticulant époxydé au moins deux fois pour la réticulation du polyacrylate, le réticulant époxydé au moins deux fois étant choisi dans un groupe comprenant les acides gras, les esters d'acide gras, les alcools gras, les esters d'alcools gras et leurs combinaisons.

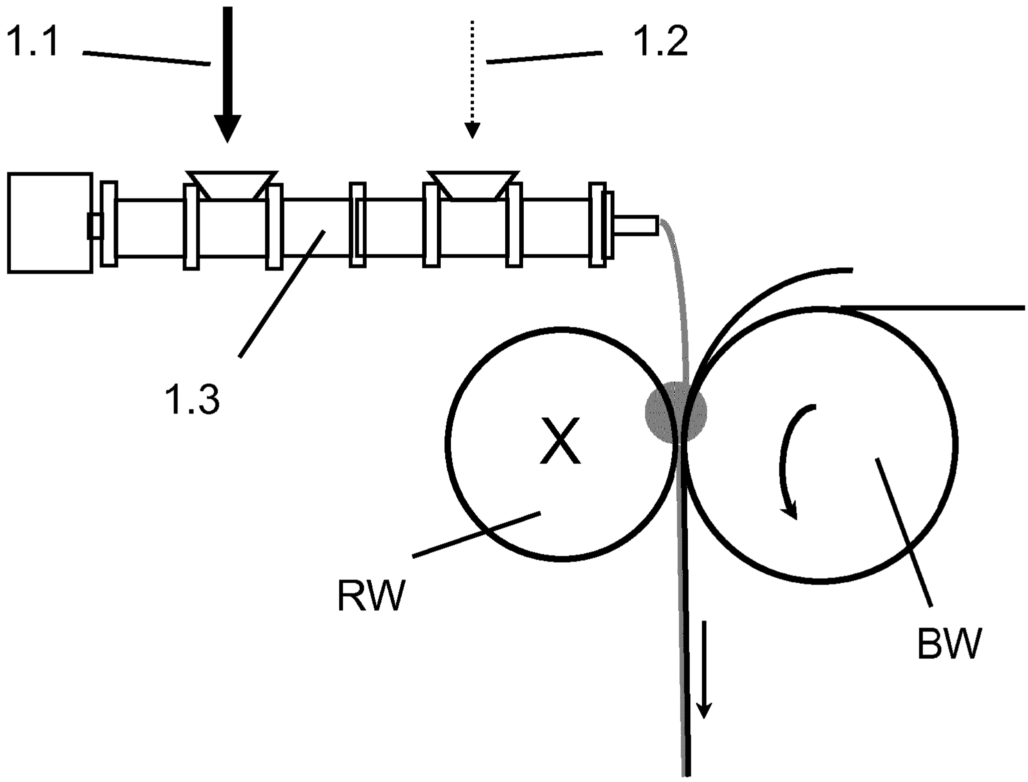


**Fig. 1**

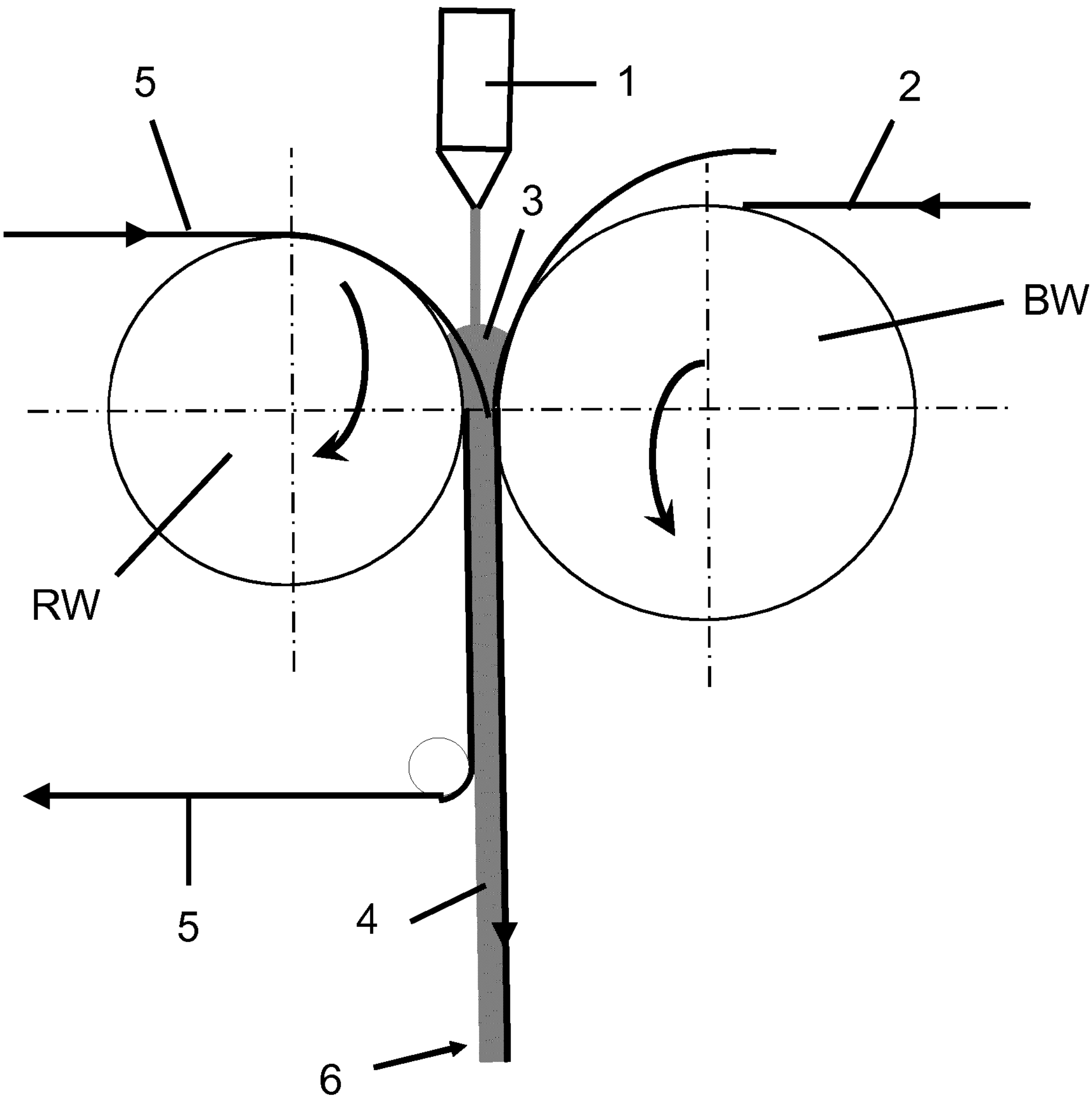


Fig. 2

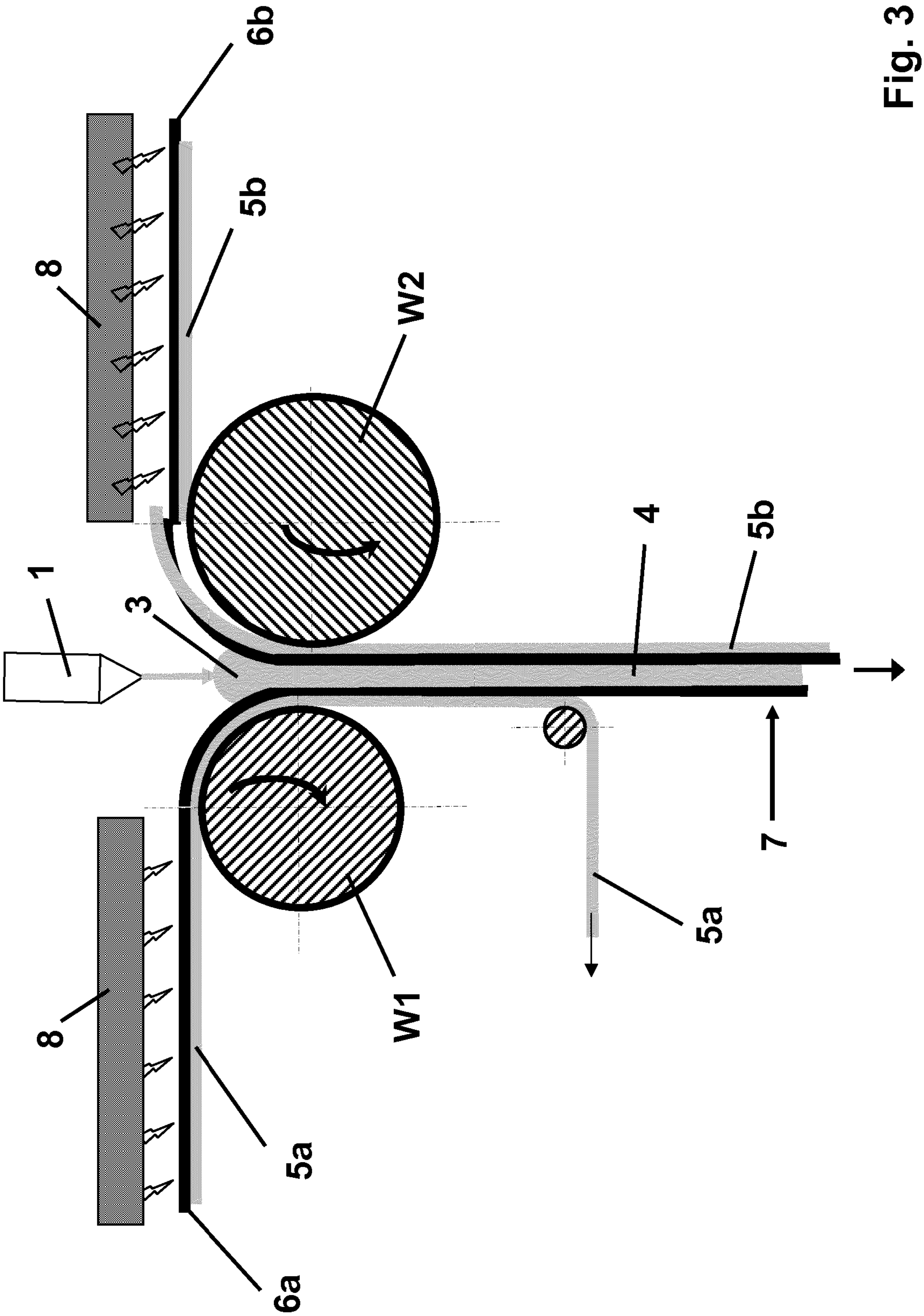


Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1978069 A1
- WO 2006027387 A1


### In der Beschreibung aufgeführte Nicht-Patentliteratur


- **T.G. FOX**. *Bull. Am. Phys. Soc.*, 1956, vol. 1, 123
- *Polymer*, 1967, vol. 8, 381